# EUROPÄISCHE PATENTSCHRIFT

(11) **EP 1 024 143 B1**
(45) Veröffentlichungstag und Bekanntmachung des Hinweises auf die Patenterteilung: **09.01.2002**
(21) Anmeldenummer: 99125908.6
(22) Anmeldetag: 23.12.1999
(51) Int. Cl.: C07F 7/08, C07F 7/14, C07F 7/18, C08G 77/38, C08F 299/00, C09K 19/40, C07F 7/21

(54) **Herstellung von alpha, beta-ungesättigte Carbonsäurereste enthaltenden Organosiliciumverbindungen**
Process for preparing alpha,beta-unsaturated carboxylic acid group-containing organosilicon compounds
Procédé pour la préparation de composés organosilicium contenant des acides carboxyliques avec insaturation en alpha-bèta

(30) Priorität: 28.01.1999 DE 19903333
(43) Veröffentlichungstag der Anmeldung: 02.08.2000
(73) Patentinhaber: Consortium für elektrochemische Industrie GmbH, 81379 München (DE)
(72) Erfinder: Hanelt, Eckhard, Dr., 82269 Geltendorf (DE); Sandmeyer, Frank, Dr., 84489 Burghausen (DE); Häberle, Norman, Dr., 80689 München (DE); Schindler, Wolfram, Dr., 82008 Unterhaching (DE)
(74) Vertreter: Fritz, Helmut, Dr.

(56) Entgegenhaltungen:
- DE-C- 19 833 258
- US-A- 5 211 877
- US-A- 5 610 258

## Beschreibung

Die vorliegende Erfindung betrifft ein Verfahren zur Herstellung von Organosiliciumverbindungen (P), die α,β-ungesättigte Carbonsäurereste enthalten.

Synthesen und Anwendungen von vernetzbaren Organosiloxanen und Organosilanen, insbesondere von Methacrylgruppen enthaltenden Siloxanen und Silanen, sind in der Literatur vielfach beschrieben. Häufig verwendete Materialien, die beispielsweise für Beschichtungen benutzt werden, sind alkoxysubstituierte Silane, die außer den Methacrylgruppen meistens Methoxy- oder Ethoxygruppen enthalten. Wegen der relativ geringen Reaktivität der Methacrylgruppen ist die Vernetzungsdichte der aus diesen Verbindungen hergestellten polymerisierten Schichten jedoch vergleichsweise gering. Bei vielen Anwendungen könnten durch Erhöhen der Vernetzungsdichte bessere Materialeigenschaft erreicht werden, beispielsweise eine Verbesserung der Lösungsmittelstabilität, eine Verbesserung der Haftung auf den zu beschichtenden Oberflächen oder eine Erhöhung der Härte der Beschichtungen. Mögliche Wege zur Herstellung solcher hoch vernetzter Strukturen sind die Erhöhung der Anzahl polymerisierbarer Gruppen und die Verwendung von polymerisierbaren Gruppen mit höherer Reaktivität als die der Methacrylgruppen, wie beispielsweise Acrylgruppen. Die bisher bekannten Verfahren zur Herstellung solcher Organosiloxane und Organosilane mit polymerisierbaren Gruppen hoher Reaktivität sind im technischen Maßstab jedoch nur schwierig durchzuführen oder aus methodischen Gründen insbesondere bei Acrylgruppen nicht zielführend.

Von vernetzten Organosiloxanen mit flüssigkristalliner Struktur ist bekannt, daß sie gegen äußere Einflüsse, wie zum Beispiel die Einwirkung von bestimmten organischen Lösungsmitteln, oft nicht ausreichend stabil sind. In US-A-5,362,315 sind beispielsweise Pigmente aus solchen Substanzen mit chiraler Phase beschrieben, die sich dadurch auszeichnen, daß sie eine vom Betrachtungswinkel abhängige Farbigkeit besitzen. Diese Pigmente werden in unterschiedlichen transparenten Medien, wie Lacken, Bindemitteln oder Kunststoffen eingesetzt. EP-A-724005 beschreibt, daß wenn diese Pigmente jedoch aus flüssigkristallinen Organosiloxanen hergestellt werden, die als polymerisierbare Gruppen ausschließlich Methacrylgruppen enthalten, sie dann abhängig von den Verarbeitungsbedingungen und dem Medium, in das die Pigmente eingearbeitet werden, Farbveränderungen zeigen, die in vielen Anwendungen nicht toleriert werden können. Eine Lösung oder zumindest eine Reduzierung dieses Problems kann ebenfalls durch eine Erhöhung der Netzwerkdichte der orientierten und vernetzten flüssigkristallinen Struktur erreicht werden.

Zur Herstellung von Methacrylgruppen enthaltenden Organosiloxanen und Silanen sind verschiedene Wege bekannt. Ein im technischen Maßstab häufig angewendetes Verfahren besteht in der Hydrosilylierung zweifach ungesättigter Verbindungen mit unterschiedlich reaktiven Doppel- oder Dreifachbindungen. Dabei soll eine ω-olefinisch ungesättigte Gruppe das Ziel des Si-H-Angriffes sein, während die zweite ungesättigte Gruppe nicht hydrosilyliert werden soll. Die Reaktivität der nicht zu hydrosilylierenden Gruppe muß dazu geringer sein als die Reaktivität der anderen ungesättigten Gruppen. Als ungesättigte Gruppe niedrigerer Reaktivität wird bevorzugt die Methacryldoppelbindung verwendet, prinzipiell ist aber auch die Methacryldoppelbindung hydrosilylierbar. Man findet daher in der Regel über 10% Nebenreaktionen von Methacryl- mit Si-H-Gruppen, wobei der Anteil dieser Nebenreaktionen mit der Konzentration der Methacryldoppelbindungen zunimmt. Allgemein gilt, daß infolge der konkurrierenden Hydrosilylierung der beiden verschiedenen ungesättigten Systeme bei diesem Verfahren also immer auch nicht erwünschte Nebenprodukte wie z.B. Dimere entstehen, deren Anteile u.a. von der Art der ungesättigten Gruppen und der Reaktionsführung abhängen.

Sollen als polymerisierbare Gruppen α,β-ungesättigte Carbonsäurereste mit höherer Reaktivität wie beispielsweise die Acryldoppelbindung verwendet werden, dann ist unter den Bedingungen der Hydrosilylierungsreaktion die Konkurrenz zu den ω-olefinisch ungesättigten Gruppen noch wesentlich höher als bei Methacryldoppelbindungen. Acrylgruppenhaltige Organosiloxane oder Silane sind daher auf die oben beschriebene Weise erst recht nicht zugänglich, da der hohe Anteil der Nebenreaktionen bereits bei der Hydrosilylierungsreaktion zu einer teilweisen Vernetzung oder bei Siloxanen oder Silanen mit nur einem direkt an Silizium gebundenem Wasserstoffatom zumindest zur doppelten Addition führt. Handelt es sich dabei um Organosiloxane mit mesogenen Seitengruppen, dann wird durch die dadurch verursachte Erhöhung der Viskosität die Beweglichkeit der Mesogene meist so stark reduziert, daß sich eine gleichmäßig orientierte flüssigkristalline Phase nur schlecht oder gar nicht ausbilden kann.

In US-A-5,211,877 wird daher als alternativer Weg zur Herstellung von Methacryl- oder Acrylgruppen enthaltenden flüssigkristallinen Organosiloxanen oder Silanen eine mehrstufige Synthese beschrieben, bei der die Methacryl- oder Acrylgruppe nachträglich nach beendeter Hydrosilylierung einer Vorstufe, die eine mit einer Schutzgruppe geschützte Hydroxylgruppe enthält, und anschließendem Entfernen der Schutzgruppe, durch Veresterung mit einer reaktiven Methacryl- oder Acrylverbindung eingeführt wird. Wegen der großen Anzahl der notwendigen Reaktionsstufen ist dieser Weg jedoch eher für kleine Laborsynthesen praktikabel. Für die Produktion von hochvernetzbaren Organosiloxanen und Organosilanen im technischen Maßstab ist er nicht geeignet.

Der vorliegenden Erfindung liegt die Aufgabe zugrunde, ein im technischen Maßstab realisierbares Verfahren bereitzustellen, das es mit hoher Selektivität ermöglicht, α,β-ungesättigte Carbonsäurereste enthaltende Organosiliciumverbindungen herzustellen, die vernetzbar sind.

Gegenstand der Erfindung ist ein Verfahren zur Herstellung von Organosiliciumverbindungen (P), die α,β-ungesättigte Carbonsäurereste der allgemeinen Formel (1)

-A-O-C(O)-CR=CH₂ (1),

enthalten, bei dem in einem ersten Schritt Organosiliciumverbindungen (H), die direkt an Silicium gebundene Wasserstoffatome enthalten, in Gegenwart von Metallen oder Verbindungen der Platingruppe als Katalysator mit olefinisch ungesättigten Verbindungen (U) mit endständiger Doppel- oder Dreifachbindung der allgemeinen Formel (2)

Ω-O-C(O)-CRH-CH₂-Z (2),

zu Organosiliciumverbindungen (E), die Reste der allgemeinen Formel (3)

-A-O-C(O)-CRH-CH₂-Z (3),

enthalten, umgesetzt werden,
und in einem zweiten Schritt aus Organosiliciumverbindungen (E) Verbindungen H-Z eliminiert werden,
wobei
- **A**: einen zweiwertigen organischen Rest,
- Ω: einen einwertigen organischen Rest mit endständiger Doppel-oder Dreifachbindung,
- **R**: ein H-Atom oder einen Methylrest und
- **Z**: Cl, J, Br oder 4-Methyltoluolsulfonyl bedeuten.

Das Verfahren läuft in beiden Schritten mit hoher Selektivität ab und liefert deshalb sehr reine Organosiliciumverbindungen (P), da die unerwünschte Hydrosilylierung des α,β-ungesättigten Restes -CR=CH₂ in der allgemeinen Formel (1) und dadurch bedingte vorzeitige Polymerisationen vermieden werden.

Die Eliminierung der Verbindungen H-Z erfolgt vorzugsweise durch eine Base wie tertiäre Amine, beispielsweise Triethylamin oder Tributylamin, oder eines basischen Metallsalzes einer Säure wie beispielsweise K₂CO₃, Na₂CO₃, KHCO₃, NaHCO₃, Na-Acetat und KOC(O)C(CH₃)=CH₂. Die Verbindung H-Z wird dann als Salz der Base chemisch gebunden.

Die eingesetzten Organosiliciumverbindungen (H) sind insbesondere Organosiloxane, die beispielsweise linear , verzweigt, vernetzt oder als Organosilsesquioxane vorliegen können oder Organosilane.

Die eingesetzten Organosiloxane (H) sind vorzugsweise aufgebaut aus mindestens 2 gleichen oder verschiedenen Einheiten der allgemeinen Formel (4)

[HₚR¹ _{q}SiO_{(4-p-q)/2}] (4),

in der
- **R**^{**1**}: einen gegebenenfalls mit Halogenatomen substituierten C₁- bis C₁₀- Alkyl- oder Phenylrest und
- **p** und **q**: jeweils die Werte 0, 1, 2 oder 3 bedeuten,
wobei die Summe von **p** und **q** maximal 3 beträgt und in mindestens einer Einheit pro Molekül **p** die Werte 1, 2 oder 3 bedeutet.

Vorzugsweise sind die Organosiloxane (H) aufgebaut aus 2 bis 30, insbesondere 2 bis 15 Einheiten der allgemeinen Formel (4).

Vorzugsweise besitzen p und q in mindestens 30% aller Einheiten der allgemeinen Formel (4) jeweils den Wert 1. Bevorzugt als Reste **R**¹ sind Methylreste.
Besonders bevorzugte Siloxane der allgemeinen Formel (4) sind Cyclotetrasiloxane, Cyclopentasiloxane, Tetramethyldisiloxane und linearen Polymethylsiloxane mit bevorzugter Anzahl der Siliziumatome von 4 bis 15 und Trimethylsilylgruppen als Endgruppen.

Die eingesetzten Organosilane (H) besitzen vorzugsweise die allgemeine Formel (5)

HₛSiR² ₜ (5),

in der
- **R**^{**2**}: ein Halogenatom oder einen gegebenenfalls mit Halogenatomen substituierten C₁- bis C₁₀- Alkyl- oder Phenylrest,
- **s**: die Werte 1, 2, 3 oder 4 und
- **t**: die Werte 0, 1, 2 oder 3 bedeuten,
wobei die Summe von **s** und **t** maximal 4 beträgt.

Vorzugsweise bedeutet **s** die Werte 1 oder 2. Besonders bevorzugte Silane der allgemeinen Formel (5) sind solche, die Reste **R**² enthalten, die entweder alle gleich sind und jeweils ein Chloratom bedeuten oder die verschieden sind und eine Kombination von einem oder zwei Halogenatomen mit C₁ - C₄-Alkylresten oder Phenylresten bedeuten.

Bevorzugt werden Verbindungen (U) eingesetzt, bei denen in der allgemeinen Formel (2) Ω die Bedeutung R³-A⁰ hat, wobei R³ einen einwertigen Rest der Formel CH₂=CH-(CH₂)ₙ oder HC≡C-(CH₂)ₙ bedeutet, in dem **n** eine ganze Zahl im Wert von 0 bis 8 ist, wobei eine oder mehrere, einander nicht benachbarte Methyleneinheiten durch Sauerstoffatome oder Dimethylsilylreste ersetzt sein können, **A**⁰ eine chemische Bindung oder ein zweibindiger organischer Rest ist.
**A**⁰ kann nach bekannten Verfahren der organischen Synthesechemie hergestellt werden. An **A**⁰ kann durch bekannte chemische Reaktionen, wie Veresterung, Kondensation, Veretherung, Alkylierung, Alkenylierung, Alkinylierung, Acylierung, eine hydrosilylierbare Gruppe gebunden werden. **A**⁰ ist zusätzlich zur Ausbildung einer Esterbindung in der Weise befähigt, daß der organische Rest **A**⁰ an dem zweibindigen Sauerstoffatom der Estercarbonyloxygruppe gebunden vorliegt.

In einer bevorzugten Ausführungsform werden im ersten Verfahrensschritt Verbindungen (U) eingesetzt, bei denen **A**⁰ die Bedeutung (CRH)ₘ- hat, wobei m eine ganze Zahl im Wert von 0 bis 12 ist, wobei **R** ein H-Atom oder einen Methylrest bedeutet und wobei eine oder mehrere, einander nicht benachbarte Methyleneinheiten durch Sauerstoffatome, Dimethylsilylreste, 1,4-substituierte Phenylen- oder Cyclohexyleneinheiten ersetzt sein können.

Die daraus hergestellten Organosiloxane (P) eignen sich insbesondere für die Herstellung von hochvernetzten Beschichtungen und als Additive für Lackzubereitungen.

Zur Herstellung von flüssigkristallinen Organosiloxanen (P) werden in diesem Verfahren mesogene Verbindungen an die Organosiliciumverbindungen (H) hydrosilyliert.

In einer bevorzugten Ausführungsform werden polymerisierbare flüssigkristalline Organosiloxane (P) hergestellt. Dazu können im ersten Verfahrensschritt mesogene Verbindungen, die vorzugsweise ausgewählt werden aus Verbindungen der allgemeinen Formel (6),

R³-X¹- (A¹-X²)_{d}-R⁵-O-C(O) -CH(R) -CH₂-Z (6)

und Verbindungen der allgemeinen Formel (7)

R³-X¹-(A¹-X²)_{d}-R⁵-A² , (7)

eingesetzt werden, wobei
- **R**^{**3**}**, R** und **Z**: die vorstehenden Bedeutungen aufweisen,
- **R**^{**5**}: eine chemische Bindung oder einen Rest der Formel (CH₂)ₘ in dem **m** eine ganze Zahl im Wert von 1 bis 12 ist, wobei eine oder mehrere, einander nicht benachbarte Methyleneinheiten durch Sauerstoffatome oder Dimethylsilylreste ersetzt sein können bedeutet,
- **X**^{**1**}: ausgewählt wird aus chemische Bindung und zweibindigen Resten -O-, -C(O)O- und -OC(O)-,
- **X**^{**2**}: Bindeglieder bedeutet, die ausgewählt werden aus chemische Bindung und zweibindigen Resten -C(O)O-, -OC(O)-, -CH₂CH₂-, -CH=N-, -N=CH-, -N=N-, -C(O)NH-, -NHC(O)-, -C=C-, -CH=CH-, -N=N(O)- und -N(O)=N-,
- **A**^{**1**}: zweibindige Reste bedeutet, die ausgewählt werden aus gegebenenfalls mit Cyano-, Fluor- oder Methylgruppen substituierten, sechsgliedrigen homocyclischen oder heterocyclischen Ringen, wie 1,4-Phenylen, 1,4-Cyclohexylen, 2,5-Pyridinylen, 2,5-Pyranylen, 2,5-Pyrimidinylen, 5,2-Pyrimidinylen, 2,5-(1,3-Dioxanylen) und 5,2-(1,3-Dioxanylen) oder aus sechsgliedrigen Ringen bestehenden Bicyclen wie 2,6-Naphthyliden, 2,7-Naphthyliden und 1,4-Naphthyliden,
- **A**^{**2**}: eine Endgruppe bedeutet, die ausgewählt wird aus Wasserstoff-, Halogen-, Hydroxyl-, Nitril-, Methacryloyloxy-, Methacrylethylenoxy-, Cholestan-, Cholesteryl-, Doristeryl-, monofunktionelles Dianhydrohexit-, Cyclohexanresten und Alkenylresten mit 1 bis 10 Kohlenstoffatomen, in denen eine oder mehrere, einander nicht benachbarte Methyleneinheiten durch Sauerstoffatome oder Dimethylsilylreste ersetzt sein können, und
- **d**: die Werte 2 oder 3 annehmen kann.

Vorzugsweise werden mindestens 5% der Reste der Organosiloxane (P) durch Hydrosilylierung hergestellt mit Verbindungen, die ausgewählt werden aus mesogenen Verbindungen der allgemeinen Formel (6) und Verbindungen der allgemeinen Formel (2), in denen **A**⁰ die Bedeutung chemische Bindung oder ein zweibindiger organischer Rest der vorstehenden Formel (CRH)ₘ- ist.

Vorzugsweise sind mindestens 20% der Reste der Organosiloxane (P) mesogene Reste.

Als mesogene Reste werden diejenigen Gruppen bezeichnet, die in einem Molekül flüssigkristalline Eigenschaften hervorrufen können. Eine regelmäßig aktualisierte Sammlung bekannter mesogener Gruppen wird von V. Vill et al. als Datenbank unter der Bezeichnung LiqCryst herausgegeben (zu beziehen bei LCI Publisher GmbH, Eichenstr. 3, D-20259 Hamburg).

Es wurde gefunden, daß die Einführung der Gruppen -C(O)O- oder -OC(O)- als Reste **X**^{**2**} die Ausbildung homogener flüssigkristalliner Phasen günstig beeinflußt. Diese Reste sind daher bevorzugt.

Als mesogene Verbindungen (U) der allgemeinen Formel (6) sind die Verbindungen (U) der allgemeinen Formel (8), 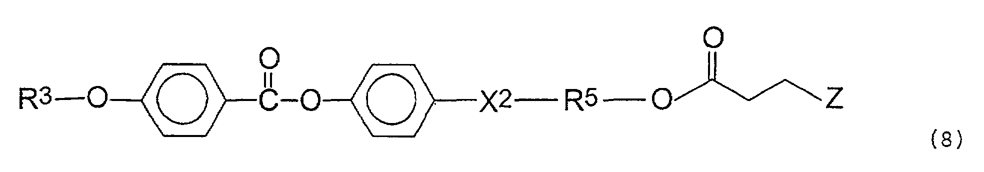 bevorzugt, wobei **X**^{**2**}**, R**^{**5**} und **Z** die für die allgemeine Formel (6) angegebenen Bedeutungen haben.
In den besonders bevorzugten Verbindungen (U) der allgemeinen Formel (8) werden **X**^{**2**} ausgewählt aus chemische Bindung und zweibindigen Resten der Gruppe -C(O)O- und -OC(O)-, werden **R**^{**5**} ausgewählt aus chemische Bindung und C₁- bis C6- Alkylresten und Z bedeutet ein Chloratom. **R**^{**3**} ist vorzugsweise eine Gruppe CH₂=CH-CH₂-.

Bei der Hydrosilylierung werden die vorzugsweise aus Einheiten der allgemeinen Formeln (4) oder (5) aufgebauten Organosiloxane (H), die direkt an Silicium gebundene Wasserstoffatome enthalten, gleichzeitig oder nacheinander mit einem frei einstellbaren Gemisch von olefinisch ungesättigten Verbindungen (U) mit endständigen Doppel- oder Dreifachbindungen der allgemeinen Formel (2) in Gegenwart von vorzugsweise mindestens einem Metall der Platingruppe und/oder dessen Verbindungen umgesetzt, wobei die Summe der Molzahlen der olefinisch ungesättigten Verbindungen (U) der Summe der Si-H-Bindungen in den Organosiloxanen (H) entspricht oder zur Sicherstellung der vollständigen Absättigung ein Überschuß einer der beiden Komponenten (H) oder (U) bis zu 20 % vorgelegt wird. Geeignete Verfahren zur Hydrosilylierung sind beispielsweise in US-A-5,211,877, US-A-5,214,077 und in DE-A-19541838 beschrieben.

Beispiele für Metalle der Platingruppe und/oder deren Verbindungen - nachfolgend Platinkatalysator genannt -, die im erfindungsgemäßen Verfahren eingesetzt werden können, sind Platin, Palladium, Rhodium, Iridium und deren Verbindungen, vorzugsweise Platin und/oder dessen Verbindungen. Es können alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auch auf Trägern, wie Siliciumdioxyd, Aluminiumoxyd oder Aktivkohle befinden kann, Verbindungen oder Komplexe von Platin, wie Platinhalogenide, z.B. PtCl₄, H₂PtCl₆ x 6 H₂O, Na₂PtCl₄ x 4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆ x 6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetra-chlorid mit sec.-Butylamin, oder Ammonium-Platinkomplexe gemäß EP-B 110 370.

Der Platinkatalysator wird vorzugsweise in Mengen von 0.05 mmol bis 0.50 mmol eingesetzt, bezogen auf die Menge des elementaren Platins oder der verwendeten Platinverbindungen pro Mol der im eingesetzten Siloxan enthaltenen Si-H-Gruppen. Die Reaktion wird vorzugsweise bei Temperaturen von 0°C bis 110°C, und vorzugsweise bei Drücken von 0.05 MPa bis 1.0 Mpa durchgeführt.

Die Hydrosilylierung kann in Substanz oder in Lösungsmitteln, wie Kohlenwasserstoffen, Ethern oder Estern durchgeführt werden. Falls die Reaktion in einem Lösungsmittel oder Lösungsmittelgemisch durchgeführt wird, sind aprotische Lösungsmittel oder Lösungsmittelgemische mit einem Siedepunkt bis 160°C bei etwa 0.1 Mpa bevorzugt. Die einzelnen Reaktionspartner müssen nicht notwendigerweise in dem Lösungsmittel löslich sein, da die Reaktion auch in einer Suspension oder Emulsion durchgeführt werden kann. Die Reaktion kann auch in einem Lösungsmittelgemisch mit Mischungslücke durchgeführt werden, wenn mindestens einer der Reaktionspartner in jeder der beiden Phasen löslich ist.

Ein Vorteil dieses Hydrosilylierungsverfahrens ist, daß vor der Eliminierung von Verbindungen H-Z im zweiten Verfahrensschritt eine Aufarbeitung des Reaktionsproduktes, welches Organosiliciumverbindungen (E) enthält, nicht notwendig ist.

Nach Abschluß der Eliminierungsreaktion und Aufreinigung der als Reaktionsprodukt anfallenden Organosilane (P) können diese bevorzugt aus Silanen der allgemeinen Formel (5) hergestellten Organosilane (P), die hydrolysierbare Reste **R**^{**2**} enthalten, nach bekannten Verfahren, wie beispielsweise in US-A-5,214,077 beschrieben, zu Organosiloxanen (P) äquilibriert und kondensiert werden.

Insbesondere ist das Eliminierungsverfahren auch für die Produktion von Organosiloxanen (P) mit flüssigkristalliner Phase anwendbar.

Aus den über das Eliminierungsverfahren hergestellten Organosiliciumverbindungen (P) können durch Polymerisation beispielsweise hochvernetzte Beschichtungen hergestellt und soweit diese Verbindungen flüssigkristalline Phasen besitzen, orientierte und vernetzte Schichten mit flüssigkristalliner Struktur produziert und für verschiedene Anwendungen bereitgestellt werden.

Es können auch Zusammensetzungen zubereitet werden, welche Organosiliciumverbindungen (P) enthalten und zu Polymerisaten vernetzt werden können.

Das Eliminierungsverfahren ermöglicht die Produktion von Organosiloxanen und Organosilanen (P) mit einer hohen Konzentration an α,β-ungesättigten Carbonsäureresten hoher Reaktivität, wie beispielsweise Acrylgruppen. Beim Polymerisieren dieser Verbindungen wird eine hohe Vernetzungsdichte erreicht. Die daraus hergestellten Beschichtungen zeichnen sich insbesondere durch eine erhöhte Härte, verbesserte Kratzfestigkeit und erhöhte Beständigkeit gegen organische Lösungsmittel aus.

Die über das Eliminierungsverfahren hergestellten flüssigkristallinen Organosilane und Organosiloxane (P) können zur Herstellung von hochvernetzten, flüssigkristallinen Polymeren verwendet werden, für die nach dem Stand der Technik verschiedene Einsatzmöglichkeiten bekannt sind. Aufgrund ihrer optisch anisotropen Eigenschaften sind sie beispielsweise besonders gut geeignet für die Herstellung von optisch anisotropen Schichten, beispielsweise optischen Verzögerungsfolien, Interferenzpigmenten sowie wellenlängen-und polarisationsselektiven optischen Filtern. Die Herstellung solcher optisch anisotropen Schichten erfordert im allgemeinen eine gleichmäßige Orientierung der Mesogene in einer möglichst kurzen Zeit nach dem Auftragen der Schicht. Solche zusätzlichen Anforderungen wie beispielsweise eine schnelle Orientierung, die durch eine niedrige Viskosität des vernetzbaren flüssigkristallinen Polymers begünstigt wird, können durch Zumischung von geeigneten niedermolekularen Komponenten oft besser erfüllt werden. Daher werden die nach dem Eliminierungsverfahren hergestellten Organosiloxane (P) auch in Mischungen mit anderen flüssigkristallinen oder nichtflüssigkristallinen Materialien verwendet, soweit diese zusätzlichen Mischungskomponenten die Ausbildung der flüssigkristallinen Phase nicht behindern.

Als bevorzugte zusätzliche Mischungskomponenten werden Verbindungen der allgemeinen Formel (6) sowie Verbindungen der allgemeinen Formeln (9) und (10)

R⁷-X¹-(A¹-X²)_{d}-R⁵ -A³ (9),

A⁴ -R⁵-(X²-A¹)_{d}-X¹-R⁵-K-R⁵-X¹-(A¹-X²)ₐ-R⁵-A⁴ (10),

verwendet, wobei
**R**^{**5**}**, X**^{**1**}**, X**^{**2**}**, A**^{**1**} und **d** unabhängig voneinander verschieden sein können und die für die allgemeinen Formeln (6) und (7) angegebenen Bedeutungen haben,
**R**^{**7**} ausgewählt wird aus der Gruppe der Acryloyloxy-, Methacryloyloxy- und Acryl- bzw. Methacrylethylenoxyreste und der Gruppe der Reste mit der Formel H₂C=CH-(CⱼH₂ⱼ₋₁), in der j eine ganze Zahl im Wert von 1 bis 8 ist, wobei eine oder mehrere, einander nicht benachbarte Methyleneinheiten durch Sauerstoffatome oder Dimethylsilylreste ersetzt sein können,
**A**^{**3**} ausgewählt wird aus der Gruppe der Wasserstoffatome, Halogenatome, Hydroxyl-, Nitril-, Acryloyloxy-, Methacryloyloxy-, Acryl- bzw. Methacryloxyethylenoxyreste, Cholestanreste, Cholesterylreste, Doristerylreste, Dianhydrohexitreste, Cyclohexanreste und der Alkenylreste mit 1 bis 10 Kohlenstoffatomen, in denen eine oder mehrere, einander nicht benachbarte Methyleneinheiten durch Sauerstoffatome oder Dimethylsilylreste ersetzt sein können,
**K** ausgewählt wird aus der Gruppe der Dianhydrohexit-Derivate und inbesondere Dianhydrosorbid oder Dianhydromannit bedeutet,
**A**^{**4**} gleiche oder verschiedene Reste bedeutet, die ausgewählt werden aus der Gruppe der Wasserstoffatome, Halogenatome, Hydroxyl-, Nitril-, Acryloyloxy-, Methacryloyloxy-, Acryl- bzw. Methacryloxyethylenoxyrest, Cyclohexanreste und der Alkenylreste mit 1 bis 10 Kohlenstoffatomen, wobei eine oder mehrere, einander nicht benachbarte Methyleneinheiten durch Sauerstoffatome oder Dimethylsilylreste ersetzt sein können.

Optisch anisotrope Schichten können durch das Eliminierungsverfahren hergestellte flüssigkristalline Organosiloxane (P) oder Mischungen derselben sowohl untereinander als auch mit. anderen flüssigkristallinen oder nichtflüssigkristallinen Materialien, soweit diese zusätzlichen Mischungskomponenten die Ausbildung einer flüssigkristallinen Phase nicht behindern, enthalten. Die optisch anisotropen Schichten werden vorzugsweise hergestellt, indem flüssigkristalline Organosiloxane (P) oder Mischungen, die Organosiloxane (P) enthalten, auf ein Substrat aufgetragen, orientiert und anschließend durch eine chemische Reaktion fixiert werden. Besonders bevorzugt werden zur Herstellung der optisch anisotropen Schichten flüssigkristalline Organosiloxane (P), die aus Verbindungen der allgemeinen Formeln (4), (5), (6) und (7) hergestellt sind und Mischungskomponenten gemäß der allgemeinen Formeln (6), (9) und (10) verwendet.
Die flüssigkristallinen Organosiloxane (P) oder eine die flüssigkristallinen Organosiloxane (P) enthaltende LC-Mischung können in Lösung oder als Trockensubstanz oberhalb des Glaspunkts der lösungsmittelfreien Trockensubstanz auf die Substratoberfläche aufgetragen werden, beispielsweise durch Spincoating, mit einer Rakel oder einer Walze. Falls zum Auftragen ein Lösungsmittel verwendet wird, muß dieses in einem nachfolgenden Trocknungsschritt entfernt werden. Die Dicke der trockenen LC-Schicht auf dem Substrat hängt von den Anforderungen der jeweiligen Anwendung ab. Wird die Schicht beispielsweise als Verzögerungsplatte verwendet, dann ist die notwendige Dicke der Quotient aus geforderter optischer Verzögerung und optischer Anisotropie der orientierten LC-Schicht. Vorzugsweise beträgt die Dicke der trockenen LC-Schicht zwischen 1 µm und 500 µm, besonders bevorzugt zwischen 1 µm und 60 µm.

Das Auftragen und die Orientierung der LC-Mischung kann vollkontinuierlich, semikontinuierlich oder diskontinuierlich geschehen. Ein vollkontinuierliches Verfahren ist in US-A-5,362,315 beschrieben.
Die LC-Schicht kann durch ein zweites Substrat abgedeckt werden. Die Orientierung der Mesogene erfolgt beispielsweise durch die Scherung des Materials beim Auftragen oder beispielsweise nach dem Auftragen durch die Wechselwirkung der Mesogene mit der bzw. den entsprechend ausgewählten Substratoberflächen oder durch ein elektrisches Feld.
Die Orientierung der LC-Mischung erfolgt vorzugsweise in einem Temperaturbereich von oberhalb des Glaspunktes bis unterhalb des Klärbeginns der jeweiligen LC-Mischung. Um einen einfachen technischen Prozeß zu ermöglichen, wird die Zusammensetzung der LC-Mischung vorzugsweise so abgestimmt, daß die geeignete Orientierungstemperatur zwischen 20°C und 150°C liegt. Wenn die Orientierung der Mesogene durch eine Wechselwirkung mit der bzw. den Substratoberflächen erfolgen soll, dann kann zur Verbesserung der orientierenden Wirkung eine geeignete Orientierungsschicht durch bekannte, in der Literatur vielfach beschriebene Coating-, Druck- oder Tauchverfahren auf das oder die Substratoberflächen aufgebracht werden. Die Orientierungsschichten oder die Substrate können durch zusätzliche Behandlung, z.B. Reiben, eine die Orientierung begünstigende Oberflächenstruktur erhalten. Eine ortsabhängige Veränderung der Orientierungsrichtung ist beispielsweise durch bekannte Verfahren zur Strukturierung der Orientierungsschicht mittels Belichtung mit polarisiertem UV-Licht möglich. Geeignete Verfahren zum Erreichen einer Neigung zwischen den Mesogenen einer flüssigkristallinen Phase und ihren Grenzflächen sind ebenfalls in der Literatur beschrieben, beispielsweise das Aufdampfen anorganischer Materialien unter einem schrägen Winkel. Um eine Neigung der Mesogene in einem Winkel von 10° bis 80° relativ zur Substratoberfläche zu erreichen, wird besonders bevorzugt eine Schicht aus Siliciumoxid aufgedampft.

Als Substrate können alle Materialien verwendet werden, die zur Herstellung von optischen Elementen bekannt sind. Bevorzugt sind organische oder anorganische Substrate, die im für die jeweilige Anwendung relevanten Wellenlängenbereich transparent oder semitransparent sind. Die Substrate können eben oder gekrümmt sein. Besonders bevorzugt werden Substrate verwendet, die bei der Temperatur der Herstellung, Verarbeitung und Anwendung der LC-Schichten ihre physikalischen Eigenschaften nicht verändern.
Ganz besonders bevorzugt sind Glas- oder Quarzplatten und Polymerfilme, wie beispielsweise Polycarbonate, Polysulfone, Polyethylenterephthalate, Polyimide und Celluloseacetate. Bei Bedarf können das oder die Substrate mit einer zusätzlichen Orientierungshilfe wie beispielsweise einer Schicht aus Polyimid, Polyamid, Polyvinylalkohol oder Siliciumoxid versehen sein.
Nach erfolgter Orientierung werden die flüssigkristallinen Organosiloxane (P) oder die diese flüssigkristallinen Organosiloxane (P) enthaltenden LC- Mischungen in den optisch anisotropen Schichten fixiert. Dazu werden die Organosiloxane (P) über die in den mesogenen Resten enthaltenen α,β-ungesättigten Carbonsäurereste vernetzt. Diese Vernetzung wird vorzugsweise mittels freier Radikale bewirkt, welche durch Peroxide oder andere geeignete thermisch aktivierbare Radikalbildner, durch UV-Licht, energiereiche elektromagnetische Strahlung oder Erwärmung erzeugt werden. Die Vernetzung kann aber auch mittels direkt an Silicium gebundene Wasserstoffatome enthaltende Vernetzer unter Katalyse durch Platinmetallkatalysatoren bewirkt werden. Sie kann auch kationisch oder anionisch erfolgen. Besonders bevorzugt ist die in US-A-5,211,877 und US-A-5,214,077 beschriebene Vernetzung durch UV-Licht.
Die resultierende fixierte Schicht kann zusammen mit dem Substrat in Form eines Laminats, als einseitig offener Film oder nach Entfernen des oder der Substrate auch als freier Film verwendet werden. Bevorzugt wird die Verwendung als Film zusammen mit dem Substrat oder als einseitig offener Film.
Eine andere Anwendungsform der optisch anisotropen Schichten sind optisch anisotrope Plättchen, die im folgenden Text auch als LC-Plättchen bezeichnet werden. In US-A-5,362,315 ist offengelegt, wie Pigmente mit flüssigkristalliner Struktur mit chiraler Phase, die Licht farbig reflektieren, durch Ablösen eines polymerisierten cholesterischen Films vom Substrat und anschließendes Zerkleinern der so gewonnenen Rohschollen hergestellt werden können. Danach können die Pigmente in ein geeignetes Bindemittelsystem eingearbeitet und auf ein Substrat aufgebracht werden. In DE-A-196 19 460 ist beschrieben, wie Plättchen mit für sichtbares Licht negativer Brechungsindexanisotropie durch ein ähnliches Verfahren hergestellt und verwendet werden können. Ebenso können auch die vorstehend beschriebenen Schichten nach dem Vernetzen in optisch anisotrope Plättchen zerkleinert und anschließend in einem Bindemittel auf ein Substrat aufgetragen werden. Besonders bevorzugt werden zur Herstellung der LC-Plättchen flüssigkristalline Organosiloxane und Organosilane (P), die nach dem Eliminierungsverfahren aus Verbindungen der allgemeinen Formeln (4), (5), (6) und (7) hergestellt sind und Mischungskomponenten gemäß der allgemeinen Formeln (6), (9) und (10) verwendet.
Zusammenhängende Filme der Schichten aus flüssigkristallinen Organosiloxanen (P) können für alle Zwecke eingesetzt werden, für die optisch anisotrope Schichten mit positiver und negativer Brechungsindexanisotropie geeignet sind, beispielsweise als optische Retarderfilme zur Verbesserung der Eigenschaften von Flüssigkristallanzeigen, die in der Literatur vielfach beschrieben sind. Abhängig von der Wahl der Substrate und der Orientierungsschichten sowie der Zusammensetzung der flüssigkristallinen Organosiloxane (P) und der diese Organosiloxane (P) enthaltenden LC-Mischungen können unterschiedliche Formen der Orientierung erreicht werden, die beispielsweise in Flüssigkristallanzeigen wie TN- oder STN-Displays vorteilhaft eingesetzt werden können. Beispiele möglicher Orientierungen der Mesogene in den Schichten sind eine homogene und planare Ausrichtung aller Mesogene, eine Hybridorientierung, bei der die Ausrichtung von einer Oberfläche zur gegenüberliegenden kontinuierlich von planar zu homöotrop wechselt, eine vollständig homöotrope Ausrichtung aller Mesogene, eine um die Flächennormale verdrillte planare Orientierung, bei der die Mesogene beispielsweise durch Dotieren mit einem Chiralikum oder durch gegeneinander verdrehte Orientierungschichten ähnlich wie in einer TN- oder STN-Zelle orientiert sind oder eine cholesterische Orientierung mit Ganghöhe kleiner als die Wellenlänge des sichtbaren Lichts, die wie in DE-A-196 19 460 beschrieben, zu einer negativen Brechungsindexanisotropie führt.
Durch geringfügige Abwandlung des oben beschriebenen Prozesses zur Herstellung der optisch anisotropen Schichten lassen sich weitere Anwendungen verwirklichen. Beispielsweise können absorptive Polarisationsfilter hergestellt werden, wenn eine Mischung verwendet wird, die zusätzlich zu den flüssigkristallinen Organosiloxanen (P) auch geeignete Farbstoffmoleküle enthält, die sich entlang der Mesogene ausrichten und dabei die Ausbildung der flüssigkristallinen Phase nicht behindern. Optische Speichermedien, die auf einer lokalen Änderung des Brechungsindex beruhen, lassen sich herstellen, indem die Orientierung der mesogenen Reste des flüssigkristallinen Organosiloxans (P) vor dem Vernetzen lokal verändert wird. Dies kann beispielsweise durch lokale UV-Vernetzung durch eine für UV-Strahlung undurchlässige Maske erreicht werden, wenn zwischen den einzelnen Belichtungsschritten die von außen wirkenden Orientierungskräfte oder die Temperatur der LC-Schicht verändert wird. Eine andere Möglichkeit ist die Strukturierung der Orientierungsschicht, wie sie beispielsweise bei der LCD-Herstellung zur Erzeugung von Sub-Pixeln angewendet wird.
Wenn die flüssigkristallinen Organosiloxane (P) oder Mischungen derselben sowohl untereinander als auch mit anderen flüssigkristallinen oder nichtflüssigkristallinen Materialien, soweit diese zusätzlichen Mischungskomponenten die Ausbildung einer flüssigkristallinen Phase nicht behindern, Verbindungen enthalten, die eine chirale nematische Phase induzieren (Chiralika), dann können diese verwendet werden zur Herstellung von polarisations- und wellenlängenselektiven optischen Filtern oder LC-Plättchen.
Solche cholesterischen Flüssigkristalle (Cholesteric Liquid Crystal; CLC) reflektieren zirkular polarisierte elektromagnetische Strahlung in einem von der helikalen Struktur des CLC abhängigen Wellenbereich. Die Chiralika erzeugen entweder eine rechts- oder linkshändig verdrillte Struktur, die zirkularpolarisiertes Licht mit gleicher Helizität reflektiert. Die zentrale Wellenlänge der Reflexionsbande, die im folgenden als Reflexionswellenlänge bezeichnet wird, ist bestimmt durch den Brechungsindex und die Ganghöhe der helikalen Struktur, die mit zunehmender Konzentration des Chiralikums abnimmt. Zusätzlich ist die Reflexionswellenlänge vom Betrachtungswinkel abhängig.
Die Breite der Bande ist durch die optische Anisotropie der mesogenen Reste der flüssigkristallinen Organosiloxane (P) und der weiteren Mischungskomponenten bestimmt. Sie liegt in den meisten Fällen zwischen 5% bis 15% der Reflexionswellenlänge. Für spezielle Anwendungen kann durch geeignete Maßnahmen bei der Filmherstellung, wie sie beispielsweise in US-A-5,506,704 oder US-A-5,691,789 beschrieben sind, eine variierende Ganghöhe der helikalen Struktur erzeugt werden, die zu einer zusätzlich verbreiterten Reflexionsbande führt.
Eine große Zahl von geeigneten optisch aktiven Dotierstoffen sind aus der Literatur bekannt. Für linkshelikale Materialien kann oft auf Cholesterinverbindungen zurückgegriffen werden, die außer der Chiralität auch gute mesogene Eigenschaften mitbringen, beispielsweise die aus H. Finkelmann, H. Ringsdorf et al., in Makromol. Chem. 179, 829-832 (1978) bekannten Cholesterinderivate. Ein geeignetes rechtshelikales Steroid-System, das auf Cholest-8(14)-en-3-ol (Doristerol) bzw. dessen Derivaten basiert, wird in US-A-5,695,680 beschrieben. Nichtsteroidale Systeme tendieren dazu, bei hoher Konzentration die Stabilität der flüssigkristallinen Phase zu reduzieren. Beispiele sind die aus US-A-4,996,330 und US-A-5,502,206 bekannten Weinsäureimid-Derivate. In DE-A-43 42 280 bzw. DE-A-44 08 171 werden vernetzbare, monomere Hexit-Derivate bzw. Mischungen von monomeren Dianhydrohexit -Derivaten mit anderen flüssigkristallinen Verbindungen beschrieben, die als monomere Dotierstoffe zur Herstellung von cholesterischen Netzwerken eingesetzt werden. In DE-A-196 19 460 werden Flüssigkristallmischungen beansprucht, die flüssigkristalline Organosiloxane und Dianhydrohexit-Derivate als links- oder rechtshelikale chirale Zusatzstoffe enthalten. Bei den dort beschriebenen Dianhydrohexit-Derivaten handelt es sich vorzugsweise um Verbindungen aus der Gruppe Dianhydrosorbid, Dianhydromannit und Dianhydroidit.
Aus solchen CLC- Mischungen, die flüssigkristalline Organosiloxane (P) und Chiralika enthalten, können nach dem oben beschriebenen Verfahren Schichten mit cholesterischer Orientierung hergestellt werden, die zirkularpolarisiertes Licht wellenlängenselektiv reflektieren. Bei diesen Anwendungen beträgt die Dicke der LC-Schicht vorzugsweise mehr als die dreifache Ganghöhe bis zu einer maximalen Schichtdicke von 500 µm. Besonders bevorzugt sind Schichtdicken von 1 µm bis 50 µm.
Solche Schichten mit cholesterischer Orientierung sind hervorragend geeignet für dekorative Anwendungen, wenn die Konzentration der Chiralika so gewählt ist, daß die Reflexionswellenlänge der cholesterischen Bande im sichtbaren Wellenlängenbereich liegt. Aufgrund des blickwinkelabhängigen Farbeindrucks und des metallischen Glanzes ermöglichen diese Schichten besondere Farbeffekte. Bei Anwendungen im Wertdruck und Markenschutz wird wegen dieser Farbeffekte und der Polarisation des reflektierten Lichts zusätzlich ein guter Kopierschutz erreicht.
Ein Beispiel für eine optische Anwendung ist ein planarer CLC-Filter, wie er in US-A-4,859,031 beschrieben ist. Im infraroten Bereich (IR) reflektierende CLC-Filter können beispielsweise für Wärmeschutzverglasungen eingesetzt werden. In US-A-5,682,212 ist offengelegt, wie mit cholesterischen Flüssigkristallen auf gekrümmten Substraten für sichtbares Licht bis zum nahen Ultraviolett (UV) optisch abbildende, wellenlängen-und polarisationsselektive Elemente hergestellt werden können. Mögliche Anwendungsformen dieser optischen Elemente sind beispielsweise Strahlteiler, Spiegel und Linsen. Die flüssigkristallinen Organosiloxane (P) eignen sich für die Herstellung solcher optischen Elemente vom IR- bis in den UV-Bereich, der beispielsweise durch Verwendung der in DE-A-196 19 460 beschriebenen Mischungen zugänglich ist.
Bei einigen Anwendungen der optisch anisotropen Schichten ist es auch möglich, statt eines zusammenhängenden Films eine Schicht mit LC-Plättchen zu verwenden. Die speziellen optischen Effekte der flüssigkristallinen Organosiloxane (P) können auf diese Weise mit wesentlich geringerem Aufwand appliziert werden, da der Anwender konventionelle Druck- und Beschichtungstechnologien benutzen kann, statt die aufwendigere Herstellung der Filme, die einen Orientierungs- und Vernetzungsvorgang erfordert, selbst durchzuführen. Dazu können die LC-Plättchen, wie beispielsweise in US-A-5,362,315 oder US-A-5,683,622 beschrieben, in ein geeignetes Bindemittelsystem eingearbeitet werden. Die LC-Plättchen, die flüssigkristalline Organosiloxane (P) mit α,β - ungesättigten Carbonsäureresten hoher Reaktivität wie beispielsweise Acrylgruppen enthalten, eignen sich dafür ganz besonders, da sie wegen ihrer hohen Vernetzungsdichte eine verbesserte Stabilität im Bindemittel besitzen.
Die geforderten Eigenschaften der Bindemittelsysteme, inbesondere die optischen Eigenschaften, hängen auch von der beabsichtigten Anwendung der LC-Plättchen ab. Beispielsweise werden bei Anwendungen, die die polarisations- und wellenlängenselektive Reflexion von LC-Plättchen, die chirale Zusatzstoffe enthalten, ausnutzen, bevorzugt Bindemittel eingesetzt, die mindestens im Bereich der Reflexionswellenlänge optisch transparent sind. Für Anwendungen, die die optische Anisotropie im Bereich des sichtbaren Lichts nutzen, sind Bindemittel bevorzugt, die im gesamten sichtbaren Wellenlängenbereich farblos und transparent sind.
Für optische Elemente werden bevorzugt Bindemittelsysteme verwendet, deren mittlerer Brechungsindex nach dem Aushärten dem mittleren Brechungsindex der LC-Plättchen ähnlich ist.
Zur Herstellung von dauerhaften Schichten, die LC-Plättchen enthalten, sind bevorzugt härtbare Bindemittelsysteme geeignet. Für spezielle Anwendungen können aber auch nicht härtbare Bindemittel, wie beispielsweise Öle, Pasten oder Thermoplaste verwendet werden.
Besonders bevorzugt sind Bindemittelsysteme, die die physikalischen Eigenschaften der LC-Plättchen nicht oder nur in definierter Weise verändern. Geeignete Bindemittelsysteme sind beispielsweise polymerisierbare Harze (UP-Harze, Siliconharze, Epoxidharze), Dispersionen, lösungsmittelhaltige Lacke oder Wasserlacke, oder alle transparenten Kunststoffe, beispielsweise Polyvinylchlorid, Polymethylmethacrylat, Polycarbonat. Neben diesen isotropen Bindemitteln können auch flüssigkristalline Systeme als Bindemittel verwendet werden, beispielsweise flüssigkristalline Polymere oder polymerisierbare flüssigkristalline Harze, sowie polymerisierbare LC-Silicone.
Zur Herstellung einer Schicht oder einer Folie mit speziellen optische Eigenschaften werden die LC-Plättchen in ein flüssiges Bindemittel eingerührt. Die Orientierung der Plättchen parallel zur Oberfläche der Schicht geschieht wie bei der Lackierung mit flüssigkristallinen Farbpigmenten z.B. gemäß US-A-5,362,315 beim Auftragen einer dünnen Schicht des Pigment- Bindemittelgemischs auf ein Substrat oder bei der Extrusion des Gemischs. Abhängig von den Anforderungen der jeweiligen Anwendung und den Eigenschaften des Bindemittels kann der Film nach dem Aushärten vom Substrat abgelöst werden.
Die Anwendungen der hergestellten LC-Plättchen können sich ebenso wie bei den Filmen auf eine reine Phasenverzögerung elektromagnetischer Wellen vom ultravioletten bis zum infraroten Bereich beschränken oder wenn zur Herstellung der Plättchen ein flüssigkristallines Organosiloxan verwendet wird, das Chiralika enthält, dann können daraus, wie in US-A-5,362,315 beschrieben, auch LC-Plättchen mit flüssigkristalliner Struktur mit chiraler Phase hergestellt werden, die elektromagnetische Wellen einer bestimmten Wellenlänge zirkularpolarisiert reflektieren.

Ein Beispiel für eine Verwendung der LC-Plättchen ist die Herstellung optisch abbildender, wellenlängen- und polarisationsselektiver Elemente auf gekrümmten Substraten, wie sie in US-A-5,683,622 beschrieben ist.

Für dekorative Zwecke sind die LC-Plättchen besonders geeignet, wenn die Konzentration der Chiralika so gewählt ist, daß die Reflexionswellenlänge der cholesterischen Bande im sichtbaren Wellenlängenbereich liegt. Bei Anwendungen im Wertdruck und Markenschutz sind der blickwinkelabhängige Farbeindruck und die Polarisation des reflektierten Lichts zusätzliche Sicherheitsmerkmale. Bei gleichzeitiger Verwendung von LC-Plättchen mit links- und rechtshelikaler Struktur können, wie in US-A-5,599,412 beschrieben, Drucke hergestellt werden, die bei Betrachtung durch eine Polarisationsbrille ein dreidimensionales Bild entstehen lassen.
Für die Herstellung von Sicherheitsmarkierungen zum Schutz vor Fälschungen von beispielsweise Banknoten, Wertdrucken, Dokumenten oder im Markenschutz können LC-Plättchen besonders vorteilhaft eingesetzt werden, da sie meist mit relativ geringem Aufwand in die bei diesen Anwendungen bereits existierenden Druck-oder anderen Beschichtungsprozessen inkorporiert werden können. Als für das menschliche Auge unsichtbare Markierungen sind IR-reflektierende LC-Plättchen, die man bei geringer Konzentration an Chiralika erhält, oder UV-reflektierende LC-Plättchen, die man bei hoher Konzentration an Chiralika erhält, besonders geeignet, da sie wegen ihrer guten Reflexion von Geräten mit geeigneten Detektoren leicht registriert werden können. Für solche Anwendungen sind die LC-Plättchen im Bereich des sichtbaren Lichts bevorzugt transparent und farblos. Die Wellenlänge der Reflexionsbande liegt dabei bevorzugt über 750. nm oder unter 400 nm. Neben der Reflexionswellenlänge kann dabei auch die Zirkularpolarisation der reflektierten Strahlung als zusätzliches Sicherheitsmerkmal detektiert werden. Die CLC-Plättchen werden für diese Anwendung bevorzugt in einem IR- bzw. UV-transparenten Bindemittel auf ein zu markierendes Substrat aufgebracht.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1:

a) 58,08 g (1,0 mol) Allylalkohol wurden in 200 ml Toluol gelöst und bei 90°C 190,46 g (1,5 mol) 3-Chlorpropionsäurechlorid zugetropft. Die Reaktionslösung wurde weiter 1,5 h unter Rückfluß erhitzt. Die organische Phase wurde mit 10% iger NaOH-Lösung und zweimal mit H₂O gewaschen und das Lösungsmittel eingeengt. Das Produkt wurde anschließend bei 74°C und 20 mbar destilliert. Man erhält 104,3 g 3-Chlorpropionsäureallylester (71% d. Th.).
b) 37,15 g (0,25 mol) 3-Chlorpropionsäureallylester und 15,48 g (0,052 mol) Pentamethylpentacyclosiloxan wurden in 200 ml Toluol gelöst und bei 80°C mit 0,94 ml einer 1%-igen Hexachloroplatinsäure versetzt. Die Reaktionslösung wurde 1 h bei 80°C gerührt und anschließend mit 75,9 g (0,75 mol) Triethylamin und 0,09 g 2,6-Di-tert.-butyl-4-(dimethylaminomethylen)-phenol (Ethanox® 703, Ethyl Corp., Baton Rouge, LA 70801) umgesetzt. Nach 8 h Rühren bei 80°C wurde der Niederschlag von Triethylammoniumchlorid abfiltriert und die Lösung auf einen Restlösemittelgehalt kleiner als 0,5% getrocknet. Man erhält 39,2 g eines Organosiloxans mit einem Anteil von 10% an höheren Oligomeren.

### Beispiel 2:

a) 77,8 g (0,47 mol) Eugenol (2-Methoxy-4-(2'-propenyl)phenol) wurden in 100 ml Toluol gelöst und bei 90°C 90,3 g (0,71 mol) 3-Chlorpropionsäurechlorid zugetropft. Die Reaktionslösung wurde weiter 1,5 h unter Rückfluß erhitzt. Die organische Phase wurde mit 10% iger NaOH-Lösung und zweimal mit H₂O gewaschen und das Lösungsmittel eingeengt. Das Produkt wurde anschließend bei 135°C und 40 mbar destilliert. Man erhält 92,9 g 2-Methoxy-4-(2'-propenyl)-(3"-chlorpropionyl)phenylester (77% d. Th.).
b) 19,87 g (0,078 mol) 2-Methoxy-4-(2'-propenyl)-(3"-chlorpropionyloxy)phenylester und 6,50 g (0,010 mol Si-H) lineares Organosiloxan mit einer mittleren Kettenlänge von acht wurden in 150 ml Toluol gelöst und bei 80°C mit 0,75 ml einer 1%-igen Hexachloroplatinsäure versetzt. Die Reaktionslösung wurde 1 h bei 80°C gerührt und anschließend mit 11,4 g (0,117 mol) Triethylamin und 0,05 g 2,6-Di-tert.-butyl-4-(dimethylaminomethylen)phenol (Ethanox® 703) versetzt. Nach 2 h bei 80°C wurde der Niederschlag von Triethylammoniumchlorid abfiltriert und die Lösung auf einen Restlösemittelgehalt kleiner als 0,5% getrocknet. Man erhält 24,0 g eines Organosiloxans mit einem mittlerem Molekulargewicht von 3500 und einer Verteilung von 1,4 (M_{w}/Mₙ).

Analog zu den Beispielen 1 und 2 wurden weitere acrylgruppenhaltige Organosiloxane und Organosilane hergestellt. Die nach diesen Synthesen mit GPC gemessenen Anteile höherer Oligomere bzw. die Molekulargewichtsverteilungen M_{w}/Mₙ bei linearen Organosiloxanen mit mittlerer Kettenlänge von n = 8 sind und die Viskositäten der Reaktionsprodukte sind in der folgenden Tabelle zusammengefaßt:

| Reaktion | Anteil höherer Oligomere bzw. Mw/Mn | Viskosität des Reaktionsprodukts |
|---|---|---|
| Dimethylchlorsilan / 3-Chlorpropionsäureallylester | 15 % | 0.01 Pas bei 25°C 9.4 cSt bei 25°C |
| Dimethylchlorsilan / 2-Methoxy-4-(2'-propenyl)-(3"-chlorpropionyl)phenylester | 5 % | 0.09 Pas bei 25°C 85 cSt bei 25°C |
| Triethoxysilan /3-Chlorpropionsäureallylester | 20 % | 0.005 Pas bei 25°C 3.1 cSt bei 25°C |
| Triethoxysilan /2-Methoxy-4-(2'-propenyl)-(3"-chlorpropionyl)phenylester | 13 % | 0.37 Pas bei 25°C 341 cSt bei 25°C |
| Pentamethylpentacyclosiloxan /3-Chlorpropionsäureallylester | 10 % | 0.1 Pas bei 50°C |
| Pentamethylpentacyclosiloxan /2-Methoxy-4-(2'-propenyl)-(3"-chlorpropionyl)phenylester | 20 % | 0.5 Pas bei 90°C |
| Organosiloxan (n=8) /3-Chlorpropionsäureallylester | 1,7 (M_{w} /Mₙ ) | 0.2 Pas bei 30°C |
| Organosiloxan (n=8) /2-Methoxy-4- (2'-propenyl)-(3"-échlorpropionyl)phenylester | 1,4 (M_{w} /Mₙ ) | 0.5 Pas bei 90°C |

### Beispiel 3:

a) Zu einer Lösung von 324,4 g (1,2 mol) 4-Allyloxybenzoesäure-(4'-hydroxyphenyl)ester (hergestellt nach US-A-5,211,877) in 500 ml o-Xylol wurden 228,5 g (1,8 mol) 3-Chlorpropionylchlorid bei 115°C zugetropft. Die Reaktionslösung wurde nach beendeter Zudosierung des 3-Chlorpropionylchlorids 3 h nachgerührt. Die Lösung wurde auf 90°C abgekühlt und der Säurechloridüberschuß mit 30 g NaOH als 5-%-iger wäßrige Lösung ausgewaschen. Das restliche Wasser wurde ausgekreist, mit 750 ml Petrolbenzin verdünnt und das Produkt durch Abkühlen auskristallisiert. Das 1-(4'-Allyloxybenzoyloxy)-4-(4''-(3'''-chlorpropionyloxy))-benzol wurde abfiltriert, mit Petrolether gewaschen und getrocknet. Man erhielt 363,4 g (84% d. Th.) 1-(4'-Allyloxybenzoyloxy) -4-(4''-(3'''-chlorpropionyloxy))benzol mit einem Schmelzpunkt von 119°C.
b) Zu einer Lösung von 324,4 g (1,2 mol) 4-Allyloxybenzoesäure-(4'-hydroxyphenyl)ester (hergestellt nach US-A-5,211,877) in 500 ml o-Xylol wurden 308,6 g (1,8 mol) 3-Brompropionylchlorid bei 115°C zugetropft. Die Reaktionslösung wurde nach beendeter Zudosierung des 3-Brompropionylchlorids 3 h nachgerührt. Die Lösung wurde auf 90°C abgekühlt und der Säurechloridüberschuß mit 30 g NaOH als 5-%-iger wäßrige Lösung ausgewaschen. Das restliche Wasser wurde ausgekreist, mit 750 ml Petrolbenzin verdünnt und das Produkt durch Abkühlen auskristallisiert. Das 1-(4'-Allyloxybenzoyloxy)-4-(4''-(3'''-brompropionyloxy))benzol wurde abfiltriert, mit Petrolether gewaschen und getrocknet. Man erhielt 418,5 g (86% d. Th.) 1-(4'-Allyloxybenzoyloxy)-4-(4''-(3'''-brompropionyloxy))benzol mit einem Schmelzpunkt von 122°C.

### Beispiel 4:

73,8 g (0,2 mol) 1-(4'-Allyloxybenzoyloxy)-4-(4''-(3'''-brompropionyloxy))benzol gemäß Beispiel 3 wurden in 500 ml Toluol gelöst, auf 80°C erwärmt und mit 0,66 g 2,6-Di-tert.-butyl-4-(dimethylaminomethylen)phenol (Ethanox® 703) versetzt. 22,2 g (0,22 mol) Triethylamin werden zugetropft und die Reaktionslösung 1 h bei 80°C gerührt. Überschüssiges Triethylamin und Triethylammoniumhydrochlorid wurden mit verd. Schwefelsäure und Wasser auswaschen und die Reaktionslösung danach azeotrop getrocknet. Durch Zugabe von 500 ml Petrolether wurde das Produkt ausgefällt und aus Isopropanol umkristallisiert. Man erhielt 61,6 g (95% d. Th.) 1-(4'-Allyloxybenzoyloxy)-4-(4''-acryloyloxy)benzol mit einer nematischen Phase zwischen einem Schmelzpunkt bei 94°C und einem Klärpunkt 108°C.

### Beispiel 5:

a) 30,05 g (0,083 mol) 1-(4'-Allyloxybenzoyloxy)-4-(4"-(3'''-chlorpropionyloxy))benzol und 5,41 g (0,018 mol) Pentamethylpentacyclosiloxan wurden in 110 ml Toluol gelöst und bei 80°C mit 0,67 ml einer 1%-igen Hexachloroplatinsäure versetzt. Die Lösung wurde nach Abklingen der exothermen Wärmeentwicklung 90 min lang bei 90°C gerührt, danach auf 80°C abgekühlt und mit 9,65 g (0,096 mol) Triethylamin, 0,09 g 2,6-Di-tert.-butyl-4-(dimethylaminomethylen)phenol (Ethanox® 703) versetzt und 1,5 h lang bei 80°C gerührt. Das Reaktionsgemisch wurde auf 20°C abgekühlt, vom unlöslichen Triethylammoniumhydrochlorid abfiltriert und das Rohprodukt mit Petrolether / Ethanol (2:1) ausgefällt. Der Niederschlag wurde in Toluol gelöst, die Lösung filtriert und auf einen Restlösemittelgehalt kleiner als 0,5% getrocknet. Man erhält 29,9 g (79% d. Th.) eines Organosiloxans mit einer nematischen Phase zwischen einem Glaspunkt bei 21°C und einem Klärpunkt bei 117°C.
b) 32,44 g (0,08 mol) 1-(4'-Allyloxybenzoyloxy)-4-(4''-(3'''-brompropionyloxy))benzol und 5,41 g (0,018 mol) Pentamethylpentacyclosiloxan wurden in 110 ml Toluol gelöst und bei 80°C mit 0,67 ml einer 1%-igen Hexachloroplatinsäure versetzt. Die Lösung wurde nach Abklingen der exothermen Wärmeentwicklung 90 min lang bei 90°C gerührt, danach auf 30°C abgekühlt und mit 9,26 g (0,92 mol) Triethylamin, 0,11 g 2,6-Di-tert.-butyl-4-(dimethylaminomethylen)phenol (Ethanox® 703) versetzt und 3 h lang bei 80°C gerührt. Das Reaktionsgemisch wurde auf 20°C abgekühlt, vom unlöslichen Triethylammoniumhydrobromid abfiltriert und das Rohprodukt mit Petrolether / Ethanol (2:1) ausgefällt. Der Niederschlag wurde in Toluol gelöst, die Lösung filtriert und auf einen Restlösemittelgehalt kleiner als 0,5% getrocknet. Man erhielt 33,93 g (81% d. Th.) eines Organosiloxans mit einer nematischen Phase zwischen einem Glaspunkt bei 23°C und einem Klärpunkt bei 116°C.

### Beispiel 6:

42,07 g (0,116 mol) 1-(4'-Allyloxybenzoyloxy)-4-(4''-(3'''-chlorpropionyloxy))benzol und 7,57 g (0,032 mol) Tetramethyltetracyclosiloxan wurden in 150 ml Toluol gelöst und bei 80°C mit 0,94 ml einer 1%-igen Hexachloroplatinsäure versetzt. Die Lösung wurde nach Abklingen der exothermen Wärmeentwicklung 90 min lang bei 90°C gerührt, danach auf 80°C abgekühlt und mit 13,51 g (0,134 mol) Triethylamin und 0,13 g 2,6-Di-tert.-butyl-4-(dimethylaminomethylen)phenol (Ethanox® 703) versetzt und 1,5 h lang bei 80°C gerührt. Das Reaktionsgemisch wurde auf 20°C abgekühlt, vom unlöslichen Triethylammoniumhydrochlorid abfiltriert und das Rohprodukt mit Petrolether / Ethanol (2:1) ausgefällt. Der Niederschlag wurde in Toluol gelöst, die Lösung filtriert und auf einen Restlösemittelgehalt kleiner als 0,5% getrocknet. Man erhielt 40 g (75% d. Th.) eines Organosiloxans mit einer nematischen Phase zwischen einem Glaspunkt bei 17°C und einem Klärpunkt bei 111°C.

### Beispiel 7:

28,65 g (0,079 mol) 1-(4'-Allyloxybenzoyloxy)-4-(4''-(3'''-chlorpropionyloxy))benzol und 6,72 g (0,0105 mol) H-Siloxan (mittlere Kettenlänge n = 8) wurden in 100 ml Toluol gelöst und bei 80°C mit 0,60 ml einer 1%-igen Hexachloroplatinsäure versetzt. Die Lösung wurde nach Abklingen der exothermen Wärmeentwicklung 90 min lang bei 90°C gerührt, danach auf 80°C abgekühlt und mit 10,04 g (0,099 mol) Triethylamin und 0,07 g 2,6-Di-tert.-butyl-4-(dimethylaminomethylen)phenol (Ethanox® 703) versetzt und 1,5 h lang bei 80°C gerührt. Das Reaktionsgemisch wurde auf 20°C abgekühlt, vom unlöslichen Triethylammoniumhydrochlorid abfiltriert und auf einen Restlösemittelgehalt kleiner als 0,5% getrocknet. Man erhielt 30,3 g eines Organosiloxans mit einer nematischen Phase zwischen einem Glaspunkt bei 10°C und einem Klärpunkt bei 66°C.

### Beispiel 8:

a) Zu einer Lösung von 54,06 g (0,2 mol) 4-Allyloxybenzoesäure-(4'-hydroxyphenyl)ester (hergestellt nach US-A-5,211,877) in 250 ml o-Xylol wurden 37,53 g (0,22 mol) 4-Methoxybenzoesäure-chlorid bei 145°C innerhalb 1 h zugetropft. Die Reaktionslösung wurde nach beendeter Zudosierung des Säurechlorid 3 h nachgerührt. Die Lösung wurde auf 95°C abgekühlt und mit 10% iger NaOH-Lösung und H₂O neutral gewaschen. Überschüssiges Wasser wurde azeotrop ausgekreist und das Produkt durch Abkühlen auskristallisiert und abfiltriert. Man erhielt 55,8 g 1-(4'-Allyloxybenzoyloxy)-4-(4''-(4'''-methoxybenzoyloxy))benzol (69% d. Th.) mit einem Schmelzpunkt bei 161°C.
b) 108,26 g (0,30 mol) 1-(4'-Allyloxybenzoyloxy)-4-(4''-(3'''-chlorpropionyloxy))benzol und 33,3 g (0,075 mol) 1-(4'-Allyloxybenzoyloxy)-4-(4''-(4'''-methoxybenzoyloxy))benzol und 24,35 g (0,081 mol) Pentamethylpentacyclosiloxan wurden in 100 ml Toluol gelöst und bei 80°C mit 1,4 ml einer 1%-igen Hexachloroplatinsäure versetzt. Die Lösung wurde nach Abklingen der exothermen Wärmeentwicklung 90 min lang bei 90°C gerührt, danach auf 80°C abgekühlt und mit 37,95 g (0,375 mol) Triethylamin und 0,3 g 2,6-Di-tert.-butyl-4-(dimethylaminomethylen)-phenol (Ethanox® 703) versetzt und 1,5 h bei 80°C gerührt. Das Reaktionsgemisch wurde auf 20°C abgekühlt, vom unlöslichen Triethylammoniumhydrochlorid abfiltriert und auf einen Restlösemittelgehalt kleiner als 0,5% getrocknet. Man erhält 147,4 g eines Organosiloxans mit einer nematischen Phase zwischen einem Glaspunkt bei 21°C und einem Klärpunkt bei 151°C.

### Beispiel 9:

a) Zu einer Lösung aus 249 g 4-Hydroxybenzoesäureethylester (1,5 mol), 3 g Kaliumiodid (0,018 mol) und 248 g Kaliumcarbonat (1,8 mol) in 2 l DMF wurde 276,6 g 4-Chlorbutylacetat (1,8 mol) gegeben und 11 h bei 90°C gerührt. Die Reaktionsmischung wurde auf 5 l Eiswasser gegeben, der ausgefallene Niederschlag abgesaugt und mit 4 l Eiswasser gewaschen. Das Rohprodukt wurde in 3 l Ethanol gelöst, mit Kaliumhydroxid (400 g) versetzt und 3 h unter Rückfluß erhitzt. Die Reaktionsmischung wurde auf 6 l Eiswasser gegeben, mit konzentrierter Salzsäure sauer eingestellt und der Niederschlag abfiltriert. Der Niederschlag wurde mit Wasser neutral gewaschen und anschließend getrocknet. Man erhielt 282,1 g 4-(4'-Hydroxybutoxy)-benzoesäure (Ausbeute 89%).
b) Eine Lösung aus 282 g 4-(4'-Hydroxybutoxy)-benzoesäure (1,34 mol), 325 ml frisch destillierter Methacrylsäure (3,35 mol), 0,3 g 2,6-Di-tert.-butyl-4-(dimethylamino-methylen)phenol (Ethanox® 703) und 23,7 g p-Toluolsulfonsäure in 1,1 l von 1,1,1-Trichlorethan wurde 10 h unter Rückfluß am Wasserabscheider erhitzt. Die Reaktionsmischung wurde auf 60°C - 70°C abgekühlt, in 2,5 l Petrolether eingerührt und der Niederschlag abfiltriert. Nach Waschen mit Petrolether wurde der Niederschlag bei Raumtemperatur im Vakuum 24 h getrocknet. Man erhält 223,7 g 4-(4'-Methacryloxybutoxy)benzoesäure (Ausbeute 60%).
c) 4,8 g Thionylchlorid (0,04 mol) wurden bei 80°C zu 10 g 4-(4'-Methacryloxybutoxy)benzoesäure (0,036 mol) und 0,01 g 2,6-Di-tert.-butyl-4-(dimethylaminomethylen)phenol (Ethanox® 703) in Toluol (40ml) gegeben und 30 min gerührt, bis die Gasentwicklung abgeklungen war. Das überschüssige Thionylchlorid wurde abdestilliert und das Produkt anschließend bei 0°C in 5 ml Pyridin und 5 ml Toluol gegeben und zweimal mit je 100 ml Dichlormethan extrahiert. Die vereinigten organischen Extrakte wurden nach dem Trocknen über Calciumchlorid mit 50 mg Hydrochinon versetzt und eingeengt. Der Rückstand wurde an Kieselgel (Toluol/ Essigester (5:1)) chromatographiert und lieferte 7,5 g Bis-1,4-[4'-(4''-Methacryloxybutoxy)benzoyloxy]benzol (Ausbeute 66%) mit einer nematischen Phase zwischen einem Glaspunkt bei 89°C und einem Klärpunkt bei 146°C.

### Beispiel 10:

a) 902,6 g 2-Acetylisosorbid (4,8 mol) nach EP 057 847 wurden in 1,7 l Xylol gelöst und mit einer Lösung von 900 g Anisoylchlorid (5,3 mol) in 200 ml Xylol versetzt. Die Mischung wurde 5 h unter Rückfluß erhitzt. Nach vollständigem Umsatz wurde auf Raumtemperatur abgekühlt, wobei das Produkt ausfiel. Der Kristallkuchen wurde abgesaugt und mit 600 ml Petrolether gewaschen und an der Luft getrocknet. Man erhielt 1278,8 g 2-Acetyl-5-anisoylisosorbid (Ausbeute 83%).
b) 639 g 2-Acetyl-5-anisoylisosorbid (1,98 mol) wurden in 2,5 l Methanol vorgelegt und mit 269,4 ml wässriger 25%-iger Ammoniaklösung (3,96 mol) versetzt. Die Lösung wurde 3 h bei 55°C gerührt. Das Lösemittel und der überschüssige Ammoniak wurden im Vakuum abgedampft und der Rückstand im Vakuum getrocknet. Die Umsetzung von 5-Anisoylisosorbid erfolgte ohne weitere Reinigung.
c) 232,35 g (0,83 mol) des so erhaltenen 5-Anisoylisosorbid, 230,0 g (0,87 mol) 4-(4'-Acryloylbutoxy)benzoesäure (hergestellt analog Beispiel 9b unter Verwendung von Acrylsäure statt Methacrylsäure), 30 mg 2,6-Di-t-butyl-4(dimethylaminomethyl)phenol (Ethanox® 703) und 5,5 g Dimethylaminopyridin wurden in 1 l Methylenchlorid gelöst und auf 6°C abgekühlt. Bei dieser Temperatur wurden 196,7 g (0,95 mol) DCC zugegeben, 1 h gerührt und anschließend auf Raumtemperatur erwärmt. Ausgefallener Dicyclohexylharnstoff wurde abfiltriert, das Lösemittel im Vakuum abgezogen und der Rückstand aus 1,5 ml Isopropanol umkristallisiert. Das Kristallisat wurde nochmals mit 1 l Isopropanol gewaschen. Man erhielt 357 g 2-[4'-(4'-Acryloylbutoxy)benzoyl]-5-anisoylisosorbid (Ausbeute 82%) mit einem Schmelzpunkt von 82°C.

### Beispiel 11:

a) 18 g (0,06 mol) 4-(4'-(3''-Chlorpropionyloyl)butoxy)-benzoesäure (hergestellt analog Beispiel 9b unter Verwendung von 3-Chlorpropionsäure statt Methacrylsäure) wurden in 20 ml Toluol gelöst, mit 5,85 g (0,081 mol) Thionylchlorid versetzt und 3 h unter Rückfluß erhitzt. Danach wurde das überschüssige Thionylchlorid mit dem Lösemittel zu 50% im Vakuum abgedampft. Das verbleibende Lösemittel wurde zu einer Lösung von 15 g (0,049 mol) 5-(4'-Allyloxybenzoyl)isosorbid (hergestellt analog Beispiel 10a,b unter Verwendung von 4-Allyloxybenzoesäurechlorid statt Anisoylchlorid in Schritt 10a) in 1 l Toluol getropft. Die Mischung wurde 21 h zum Sieden erhitzt. Zur Aufarbeitung wurde der Ansatz je zweimal mit gesättigter NaHCO₃- und NaCl-Lösung gewaschen und das Lösungsmittel im Vakuum abgedampft. Durch eine Filtersäule wurde über Kieselgel mit Ethylacetat/Petrolether - Lösemittelverhältnis 1:2 - noch vorhandene 4(4'-(3''-chlorpropionyloxy)butoxy)benzoesäure abgetrennt. Danach wurde das Produkt aus Isopropanol umkristallisiert. Man erhielt 11,6 g (40% d. Th.) 5-(4'-Allyloxybenzoyl)-(4''-(4'''-(3''''-chlorpropionyl)oyl)butoxybenzoyl)isosorbid mit einem Schmelzpunkt bei 55°C.
b) 20,0 g (0,074 mol) 4-Allyloxybenzoesäure-(4'-hydroxyphenyl)-ester (hergestellt nach US-A-5,211,877) wurden in 100 ml Toluol bei 95°C gelöst und 35,4 g (0,11 mol) 4-(3'-Chlorpropionyloxy-butoxy)benzoesäurechlorid (als Lösung aus 11a) bei 90°C - 100°C zugetropft. Die Reaktionslösung wurde weitere 5 h gerührt, durch Zugabe von 200 Petrolether und Abkühlung auf 20°C ausgefällt und abfiltriert. Das Produkt wurde in Ethylacetat erneut gelöst, mit 5%-iger NaOH-Lösung neutralisiert, nachgewaschen und durch Einengen auskristallisiert. Man erhält 19,8 g (49% d. Th.) 4-Allyloxybenzoesäure- (4'-(4''-(3'''-chlorpropionyloyl)-butoxy)benzoyl)phenylester mit einem Schmelzpunkt bei 95°C.
c) 13,5 g (0,024mol) 4-Allyloxybenzoesäure-(4'-(4''-(3'''-chlorpropionyloyl)butoxy)benzoyl)phenylester, 3,44 g (0,006 mol) 5-(4'-Allyloxybenzoyl)-(4''-(4'''-(3''''-chlorpropionyloyl)butoxy)benzoyl)isosorbid und 2,6 g (0,011 mol) Tetramethyltetracyclosiloxan wurden in 90 ml Toluol gelöst und bei 70°C mit 0,8 g einer 0,5%-igen Hexachloroplatinsäure versetzt. Die Reaktionslösung wurde weiter 1,5 h bei 80°C gerührt. Anschliessend wurde die Lösung mit 9,1 g (0,09 mol) Triethylamin und 0,02 g 2,6-Di-tert.-butyl-4-(dimethylaminomethylen)phenol (Ethanox® 703) versetzt und weitere 8 h bei 80°C gerührt. Das Reaktionsgemisch wurde auf Raumtemperatur abgekühlt, das ausgefallene Triethylammoniumchlorid abfiltriert und das Produkt durch Zugabe von 250 ml Ethanol bei 0°C ausgefällt und auf einen Restlösemittelgehalt kleiner als 0,5% getrocknet. Man erhielt 8,3 g eines Organosiloxans mit einer cholesterischen Phase zwischen einem Glaspunkt bei 28°C und einem Klärpunkt bei 83°C.
d) 2 g des Organosiloxans und 0,01 g Photoinitiator 2-Methyl-1-[4-(methylthio)phenyl]-2-morpholinopropanon-1 (Irgacure® 907 der Ciba-Geigy AG) wurden in 30 ml para-Xylol gelöst, über einen 0,45 µm Membranfilter filtriert und gefriergetrocknet. Zwei Glasplatten wurden mit je einer Orientierungsschicht aus Polyvinylalkohol versehen, die mit einem Samttuch unidirektionell gerieben wurde. 0,1 g der getrockneten Mischung wurde bei 90°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten wurde die Mischung verteilt, bis ein ca. 10 µm dicker Film zwischen den Orientierungsschichten verblieb. Der Film wurde 5 Minuten bei 75°C getempert, bis eine gleichmäßige Orientierung erreicht war und anschließend durch Bestrahlung mit UV-A-Licht (etwa 100 mW/cm² für 15 sec.) polymerisiert. Der vernetzte Film zeigte bei senkrechter Aufsicht eine blaue Farbe, die mit zunehmendem Betrachtungswinkel in den violetten Bereich wechselte.

### Beispiel 12:

5 g des Organosiloxans aus Beispiel 5a, 2,1 g 1-(4'-Allyloxybenzoyloxy)-4-(4''-acryloyloxy)benzol aus Beispiel 4 und 0,035 g Irgacure® 907 wurden in 75 ml para-Xylol gelöst, über einen 0,45 µm Membranfilter filtriert und gefriergetrocknet. Die Mischung hatte einen Glaspunkt von 7°C und einen Klärpunkt von 106°C.
Zwei Glasplatten wurden mit je einer Orientierungsschicht aus Polyvinylalkohol versehen, die mit einem Samttuch unidirektionell gerieben wurde. 0,1 g der Mischung wurde bei 90°C auf die Orientierungsschicht einer der Glasplatten aufgetragen und mit der zweiten Platte so abgedeckt, daß die Reibrichtungen entgegengesetzt und parallel lagen. Durch gleichmäßigen Druck auf die Platten wurde die Mischung verteilt, bis ein ca. 7 µm dicker Film zwischen den Orientierungsschichten verblieb. Der Film wurde 10 Minuten bei 90°C getempert bis eine Monodomäne mit homogener planarer Orientierung erreicht und alle Disklinationslinien verschwunden waren. Anschließend wurde er durch Bestrahlung mit UV-A-Licht (etwa 100 mW/cm² für 15 sec.) polymerisiert. Der daraus resultierende farblose und klare Film zeigte mit Hilfe der Sénarmont-Methode eine optische Gangdifferenz von 910 nm bei einer Lichtwellenlänge von 633 nm.

### Beispiel 13:

6 g des Organosiloxans aus Beispiel 6, 1,5 g 1-(4'-Allyloxybenzoyloxy)-4-(4''-acryloyloxy)benzol aus Beispiel 4 und 0,035 g Irgacure® 907 wurden in 75 ml para-Xylol gelöst, über einen 0,45 µm Membranfilter filtriert und gefriergetrocknet. Die Mischung hatte einen Glaspunkt von 17°C und einen Klärpunkt von 111°C.
Wie in Beispiel 12 wurde aus dieser Mischung ein ca. 12 µm dicker, orientierter und vernetzter Film zwischen Glasplatten mit den Orientierungsschichten hergestellt. Der farblose und klare Film zeigte mit Hilfe der Sénarmont-Methode eine optische Gangdifferenz von 640 nm bei einer Wellenlänge von 633 nm.

### Beispiel 14:

7 g des Organosiloxans aus Beispiel 8b, 2 g Bis-1,4-[4'-(4''-Methacryloxybutoxy)-benzoyloxy]-benzol aus Beispiel 9c und 0,045 g Irgacure® 907 wurden in 100 ml para-Xylol gelöst, über einen 0,45 µm Membranfilter filtriert und gefriergetrocknet. Wie in Beispiel 12 wurde aus dieser Mischung ein ca. 11 µm dicker, orientierter und vernetzter Film zwischen Glasplatten mit den Orientierungsschichten hergestellt. Der farblose und klare Film zeigte mit Hilfe der Sénarmont-Methode eine optische Gangdifferenz von 1270 nm bei einer Wellenlänge von 633 nm.

### Beispiel 15:

85,2 g des Organosiloxans aus Beispiel 8b, 26,4 g 1-(4'-Allyloxybenzoyloxy)-4-(4''-acryloyloxy)benzol aus Beispiel 4, 8,4 g 2-[4'-(4'-Acryloylbutoxy)benzoyl]-5-anisoylisosorbid aus Beispiel 10c und 1,2 g Irgacure® 907 wurden in 500 ml para-Xylol gelöst, über einen 0,45 µm Membranfilter filtriert und gefriergetrocknet.
Die so erhaltene Mischung wurde bei 85°C mit Hilfe einer Rakel auf eine Polyethylenterephthalatfolie (Hostaphan® erhältlich bei Hoechst-Diafoil GmbH, 65203 Wiesbaden) in einer Schichtdicke ca. 15 µm aufgetragen. Die beim Auftragen erzeugte Orientierung der flüssigkristallinen Moleküle wurde durch 5 sec Bestrahlung mit einer Quecksilberdampflampe (elektrische Leistung 80 W/cm) fixiert,
Der auf der Folie enstandene Film war sowohl im kalten als auch im heißen Zustand spröde und besaß bei senkrechter Aufsicht eine grüne Farbe, die mit zunehmendem Betrachtungswinkel nach Blau wechselte. In einem mit Zirkularpolarisatoren ausgestattetem Photospektrometer wurde das vom Film durchgelassene sowie reflektierte Licht vermessen. Es wurde eine Reflexionsbande für rechtshelikales Licht bei der Wellenlänge 558 nm nachgewiesen.

### Beispiel 16:

19,8 g des Organosiloxans aus Beispiel 5a, 10,56 g Bis-1,4-[4'-(4"-Methacryloxybutoxy)benzoyloxy]benzol aus Beispiel 9c, 2,64 g 2-[4'-(4'-Acryloylbutoxy)benzoyl]-5-anisoylisosorbid aus Beispiel 10c, 10 mg 2,6-Di-t-butyl-4(dimethylaminomethyl)phenol (Ethanox® 703) und 0,83 g Photoinitiator Phenyl-bis(-2,4,6-trimethylbenzoyl)-phosphinoxid (geschützte Bezeichnung Irgacure® 819 der Ciba Spezialitätenchemie Lampertheim GmbH, 68619 Lampertheim) wurden in 100 ml Toluol bei 70°C in Lösung gebracht. Am Rotationsverdampfer wurde das Lösungsmittel bis auf unter 1% Restgehalt entfernt. Die so hergestellte flüssigkristalline Mischung besaß einen Glaspunkt bei -7°C und einen Klärpunkt bei 92°C.
Diese Flüssigkristallmasse wurde bei 82°C mit Hilfe einer Rakel auf eine Polyethylenterephthalatfolie (Hostaphan® ) in einer Schichtdicke von 10 µm aufgetragen und bei 82°C mit Hilfe einer Quecksilberdampflampe (80 W/cm) photochemisch vernetzt. Danach erhielt man einen im kalten und heißen Zustand klebfreien und spröden Film, dessen Farbe temperaturunabhängig je nach Betrachtungswinkel von grün nach blau wechselt. Ein Stück dieses Films zeigte in einem Photospektrometer unter senkrechter Aufsicht eine Reflexionswellenlänge von 520 nm.
Eine Probe dieses Films wurde nach Ablösen der Trägerfolie für 24 Stunden in ein Toluolbad getaucht. Nach 2 Stunden wurde die Probe erstmals dem Bad entnommen und die Reflexionswellenlänge überprüft. Es wurde noch keine Veränderung festgestellt. Nach 24 Stunden im Toluolbad war die Probe noch immer mechanisch stabil. Es wurde eine geringe Verschiebung der Reflexionswellenlänge auf 550 nm gemessen, die nach Trocknen reversibel war. Durch Ablösen des LC-Films von der Trägerfolie, Zerkleinerung und anschließende Mahlung in einer Laboruniversalmühle wurden Partikel bis zu einem mittleren Korndurchmesser von etwa 50 µm hergestellt. Die so gewonnene pulverförmige Fraktion wurde anschließend mittels eines Analysensiebes mit einer Maschenweite von 50 µm gesiebt und dann in ein konventionelles Alkyd-Melamin-Harzbindemittel-System (käuflich erhältlich unter der Bezeichnung Sacolyd F410/Sacopal M110 bei Kolms Chemie, A-Krems) eingearbeitet. Die Viskosität des Bindemittelsystems wurde mit einem Verdünner (Mischung aus aromatischen Kohlenwasserstoffen und Methylisobutylketon) in einem DIN-4-Auslaufbecher auf eine Auslaufzeit von ca. 80 sec eingestellt.
Die so erhaltene Mischung aus LC-Plättchen und Bindemittel wurde auf ein schwarz grundiertes Blech mit Hilfe eines Filmziehgerätes (Hersteller Fa. Erichsen) in einer Naßfilmschichtdicke von 120 µm aufgerakelt. Anschließend wurde das Blech eine Stunde bei 80°C getrocknet. Unter senkrechter Aufsicht zeigte das Blech während und nach dem Trocken eine grüne Farbe, die unter flacheren Blickwinkeln nach blau wechselte. In einem mit Zirkularpolarisatoren ausgestattetem Photospektrometer wurde unter senkrechter Aufsicht eine selektive Reflexion von rechtshelikalem Licht bei der Wellenlänge 520 nm nachgewiesen.

### Vergleichsbeispiel 17:

Aus einer gemäß US-A-5,211,877 Beispiel 2b hergestellten Flüssigkristallmischung wurde wie in obigem Beispiel 16 beschrieben ein orientierter, polymerisierter Film hergestellt. Dieser Films zeigte in einem Photospektrometer unter senkrechter Aufsicht eine selektive Reflexion von linkszirkularem Licht bei einer Wellenlänge von 530 nm. Eine Probe dieses Films wurde nach Ablösen der Trägerfolie in ein Toluolbad getaucht. Nach wenigen Minuten war der Film in weißliche, trübe Flocken zerfallen. Eine selektive Reflexion von zirkularpolarisiertem Licht war nicht mehr festzustellen auch nachdem die Flocken getrocknet wurden.

### Vergleichsbeispiel 18:

32,0 g (0,1 mol) 1-(4'-Allyloxybenzoyloxy)-4-(4''-acryloyloxy)-benzol aus Beispiel 4 und 6,0 g (0,02 mol) Pentamethylpentacyclosiloxan wurden in 110 ml Toluol gelöst und bei 80°C mit 0,69 ml einer 1%-igen Hexachloroplatinsäure versetzt. Das Reaktionsprodukt konnte nicht weiter isoliert werden, da die Lösung gelartig erstarrte.

## Patentansprüche

1. Verfahren zur Herstellung von Organosiliciumverbindungen (P), die α,β-ungesättigte Carbonsäurereste der allgemeinen Formel (1)
-A-O-C(O)-CR=CH₂ (1),
enthalten, bei dem in einem ersten Schritt Organosiliciumverbindungen (H), die direkt an Silicium gebundene Wasserstoffatome enthalten, in Gegenwart von Metallen oder Verbindungen der Platingruppe als Katalysator mit olefinisch ungesättigten Verbindungen (U) mit endständiger Doppel- oder Dreifachbindung der allgemeinen Formel (2)
Ω-O-C(O)-CRH-CH₂-Z (2),
zu Organosiliciumverbindungen (E), die Reste der allgemeinen Formel (3)
-A-O-C(O)-CRH-CH₂-Z (3),
enthalten, umgesetzt werden,
und in einem zweiten Schritt aus Organosiliciumverbindungen (E) Verbindungen H-Z eliminiert werden,
wobei
**A** einen zweiwertigen organischen Rest,
Ω einen einwertigen organischen Rest mit endständiger Doppel- oder Dreifachbindung,
**R** ein H-Atom oder einen Methylrest und
**Z** Cl, J, Br oder 4-Methyltoluolsulfonyl bedeuten.

2. Verfahren nach Anspruch 1, bei dem die Eliminierung der Verbindungen H-Z durch eine Base erfolgt.

3. Verfahren nach Anspruch 1 oder 2, bei dem die eingesetzten Organosiloxane (H) aufgebaut sind aus mindestens 2 gleichen oder verschiedenen Einheiten der allgemeinen Formel (4)
[HₚR¹ _{q}SiO_{(4-p-q)/2}] (4),
in der
**R**^{**1**} einen gegebenenfalls mit Halogenatomen substituierten C₁- bis C₁₀- Alkyl- oder Phenylrest und
**p** und **q** jeweils die Werte 0, 1, 2 oder 3 bedeuten,
wobei die Summe von **p** und **q** maximal 3 beträgt und in mindestens einer Einheit pro Molekül p die Werte 1, 2 oder 3 bedeutet.

4. Verfahren nach Anspruch 1 bis 3, bei dem die eingesetzten Organosilane (H) die allgemeine Formel (5) besitzen,
HₛSiR² ₜ (5),
in der
**R**^{**2**} ein Halogenatom oder einen gegebenenfalls mit Halogenatomen substituierten C₁- bis C₁₀- Alkyl- oder Phenylrest,
**s** die Werte 1, 2, 3 oder 4 und
**t** die Werte 0, 1, 2 oder 3 bedeuten,
wobei die Summe von **s** und **t** maximal 4 beträgt.

5. Verfahren nach Anspruch 1 bis 4, bei dem Verbindungen (U) eingesetzt werden, bei denen in der allgemeinen Formel (2) Ω die Bedeutung R³-A⁰ hat, wobei **R**^{**3**} einen einwertigen Rest der Formel CH₂=CH-(CH₂)ₙ oder HC≡C-(CH₂)ₙ bedeutet, in dem **n** eine ganze Zahl im Wert von 0 bis 8 ist, wobei eine oder mehrere, einander nicht benachbarte Methyleneinheiten durch Sauerstoffatome oder Dimethylsilylreste ersetzt sein können, **A**^{**0**} eine chemische Bindung oder ein zweibindiger organischer Rest ist.

6. Verfahren nach Anspruch 5, bei dem **A**⁰ die Bedeutung (CRH)ₘ-hat, wobei **m** eine ganze Zahl im Wert von 0 bis 12 ist,
wobei **R** ein H-Atom oder einen Methylrest bedeutet und wobei eine oder mehrere, einander nicht benachbarte Methyleneinheiten durch Sauerstoffatome, Dimethylsilylreste, 1,4-substituierte Phenylen- oder Cyclohexyleneinheiten ersetzt sein können.

7. Verfahren nach Anspruch 1 bis 5, bei dem zur Herstellung von flüssigkristallinen Organosiloxanen (P) mesogene Verbindungen an die Organosiliciumverbindungen (H) hydrosilyliert werden.

8. Verfahren nach Anspruch 7, bei dem die mesogenen Verbindungen ausgewählt werden aus Verbindungen der allgemeinen Formel (6),
R³-X¹-(A¹-X²)_{d}-R⁵-O-C(O)-CH(R)-CH₂-Z (6)
und Verbindungen der allgemeinen Formel (7)
R³-X¹-(A¹-X²)_{d}-R⁵-A², (7)
wobei
**R**^{**3**}**, R** und **Z** die vorstehenden Bedeutungen aufweisen,
**R**^{**5**} eine chemische Bindung oder einen Rest der Formel (CH₂)ₘ in dem **m** eine ganze Zahl im Wert von 1 bis 12 ist, wobei eine oder mehrere, einander nicht benachbarte Methyleneinheiten durch Sauerstoffatome oder Dimethylsilylreste ersetzt sein können bedeutet,
**X**^{**1**} ausgewählt wird aus chemische Bindung und zweibindigen Resten -O-, -C(O)O- und -OC(O)-,
**X**^{**2**} Bindeglieder bedeutet, die ausgewählt werden aus chemische Bindung und zweibindigen Resten -C(O)O-, -OC(O)-, -CH₂CH₂-, -CH=N-, -N=CH-, -N=N-, -C(O)NH-, -NHC(O)-, -C=C-, -CH=CH-, -N=N(O)- und -N(O)=N-,
**A**^{**1**} zweibindige Reste bedeutet, die ausgewählt werden aus gegebenenfalls mit Cyano-, Fluor- oder Methylgruppen substituierten, sechsgliedrigen homocyclischen oder heterocyclischen Ringen, wie 1,4-Phenylen, 1,4-Cyclohexylen, 2,5-Pyridinylen, 2,5-Pyranylen, 2,5-Pyrimidinylen, 5,2-Pyrimidinylen, 2,5-(1,3-Dioxanylen) und 5,2-(1,3-Dioxanylen) oder aus sechsgliedrigen Ringen bestehenden Bicyclen wie 2,6-Naphthyliden, 2,7-Naphthyliden und 1,4-Naphthyliden,
**A**^{**2**} eine Endgruppe bedeutet, die ausgewählt wird aus Wasserstoff-, Halogen-, Hydroxyl-, Nitril-, Methacryloyloxy-, Methacrylethylenoxy-, Cholestan-, Cholesteryl-, Doristeryl-, monofunktionelles Dianhydrohexit-, Cyclohexanresten und Alkenylresten mit 1 bis 10 Kohlenstoffatomen, in denen eine oder mehrere, einander nicht benachbarte Methyleneinheiten durch Sauerstoffatome oder Dimethylsilylreste ersetzt sein können, und
**d** die Werte 2 oder 3 annehmen kann.

## Claims

1. Process for the preparation of organosilicon compounds (P) containing α,β-unsaturated carboxylic acid radicals, of the general formula (1)
-A-O-C(O)-CR=CH₂ (1),
in which, in a first step, organosilicon compounds (H) containing hydrogen atoms bonded directly to silicon are reacted with olefinically unsaturated compounds (U) containing a terminal double or triple bond, of the general formula (2)
Ω-O-C(O)-CRH-CH₂-Z (2),
in the presence of metals or compounds from the platinum group as catalyst, to give organosilicon compounds (E) containing radicals of the general formula (3)
-A-O-C(O)-CRH-CH₂-Z (3),
and, in a second step, H-Z compounds are eliminated from organosilicon compounds (E), where
**A** is a divalent organic radical,
Ω is a monovalent organic radical containing a terminal double or triple bond,
**R** is an H atom or a methyl radical, and
**Z** is Cl, I, Br or 4-methyltoluenesulphonyl.

2. Process according to Claim 1, in which the H-Z compounds are eliminated by means of a base.

3. Process according to Claim 1 or 2, in which the organosiloxanes (H) employed are built up from at least 2 identical or different units of the general formula (4)
[HₚR¹ _{q}SiO_{(4-p-q)/2}] (4),
in which
**R**^{**1**} is a C₁- to C₁₀-alkyl or phenyl radical which is unsubstituted or substituted by halogen atoms, and
**p** and **q** each have the value 0, 1, 2 or 3,
where the sum of **p** and **q** is at most 3, and in at least one unit per molecule, **p** has the value 1, 2 or 3.

4. Process according to Claims 1 to 3, in which the organosilanes (H) employed have the general formula (5)
HₛSiR²ₜ (5),
in which
**R**^{**2**} is a halogen atom or a C₁- to C₁₀-alkyl or phenyl radical which is unsubstituted or substituted by halogen atoms,
**s** has the value 1, 2, 3 or 4, and
**t** has the value 0, 1, 2 or 3,
where the sum of **s** and **t** is at most 4.

5. Process according to Claims 1 to 4, in which compounds (U) are employed in which, in the general formula (2), Ω is R³-A⁰, where **R**^{**3**} is a monovalent radical of the formula CH₂=CH-(CH₂)ₙ or HC≡C-(CH₂)ₙ, in which **n** is an integer having a value of from 0 to 8, and in which one or more non-adjacent methylene units may be replaced by oxygen atoms or dimethylsilyl radicals, and **A**⁰ is a chemical bond or a divalent organic radical.

6. Process according to Claim 5, in which **A**^{**0**} is (CRH)ₘ-, where **m** is an integer having a value of from 0 to 12, and **R** is an H atom or a methyl radical, and where one or more non-adjacent methylene units may be replaced by oxygen atoms, dimethylsilyl radicals, 1,4-substituted phenylene or cyclohexylene units.

7. Process according to Claims 1 to 5, in which liquid-crystalline organosiloxanes (P) are prepared by hydrosilylating mesogenic compounds onto the organosilicon compounds (H).

8. Process according to Claim 7, in which the mesogenic compounds are selected from compounds of the general formula (6)
R³-X¹-(A¹-X²)_{d}-R⁵-O-C(O)-CH(R)-CH₂-Z (6)
and compounds of the general formula (7)
R³-X¹-(A¹-X²)_{d}-R⁵ -A² (7),
where
**R**^{**3**}**, R** and **Z** are as defined above,
**R**^{**5**} is a chemical bond or a radical of the formula (CH₂)ₘ, in which **m** is an integer having a value of from 1 to 12, and in which one or more non-adjacent methylene units may be replaced by oxygen atoms or dimethylsilyl radicals,
**X**^{**1**} is selected from a chemical bond and the divalent radicals -O-, -C(O)O- and -OC(O)-,
**X**^{**2**} is a binding member selected from a chemical bond and the divalent radicals -C(O)O-, -OC(O)-, -CH₂CH₂-, -CH=N-, -N=CH-, -N=N-, -C(O)NH-, -NHC(O)-, -C≡C-, -CH=CH-, -N=N(O)- and -N(O)=N-,
**A**^{**1**} is a divalent radical selected from six-membered homocyclic or heterocyclic rings, such as 1,4-phenylene, 1, 4-cyclohexylene, 2,5-pyridinylene, 2,5-pyranylene, 2,5-pyrimidinylene, 5,2-pyrimidinylene, 2,5-(1,3-dioxanylene) and 5,2-(1,3-dioxanylene), which are unsubstituted or substituted by cyano, fluorine or methyl groups, or from bicyclic compounds consisting of six-membered rings, such as 2,6-naphthylidene, 2,7-naphthylidene and 1,4-naphthylidene,
**A**^{**2**} is an end group selected from hydrogen, halogen, hydroxyl, nitrile, methacryloyloxy, methacrylylethyleneoxy, cholestane, cholesteryl, doristeryl, monofunctional dianhydrohexitol, cyclohexane and alkenyl radicals having 1 to 10 carbon atoms, in which one or more non-adjacent methylene units may be replaced by oxygen atoms or dimethylsilyl radicals, and
**d** can have the value 2 or 3.

## Revendications

1. Procédé pour la préparation de composés organosiliciés (P) qui contiennent des restes d'acides carboxyliques α,β-insaturés de formule générale (1)
-A-O-C(O)-CR=CH₂ (1)
dans lequel, dans une première étape, on fait réagir des composés organosiliciés (H) qui contiennent des atomes d'hydrogène liés directement au silicium, en présence de métaux ou de composés de la famille du platine en tant que catalyseur, avec des composés à insaturation oléfinique (U), à double ou triple liaison en bout de chaîne, de formule générale (2)
Ω-O-C(O)-CRH-CH₂-Z (2)
pour l'obtention de composés organosiliciés (E) qui contiennent des radicaux de formule (3)
-A-O-C(O)-CRH-CH₂-Z (3)
et, dans une seconde étape, on élimine les composés H-Z des composés organosiliciés (E),
A représentant un radical organique bivalent,
Ω représentant un radical organique monovalent à double ou triple liaison en bout de chaîne,
R représentant un atome d'hydrogène ou un radical méthyle et
Z représentant Cl, J, Br ou le groupe 4-méthyltoluènesulfonyle.

2. Procédé selon la revendication 1, dans lequel l'élimination des composés H-Z s'effectue au moyen d'une base.

3. Procédé selon la revendication 1 ou 2, dans lequel les organosiloxanes (H) utilisés sont constitués d'au moins 2 unités identiques ou différentes de formule générale (4)
[HₚR¹ _{q}SiO_{(4-p-q)/2}] (4)
dans laquelle
R¹ représente un radical phényle ou alkyle en C₁-C₁₀ éventuellement substitué par des atomes d'halogène et
p et q ont chacun la valeur 0, 1, 2 ou 3,
la somme de p et q étant au maximum 3 et dans au moins une unité par molécule p ayant la valeur 1, 2 ou 3.

4. Procédé selon l'une quelconque des revendications 1 à 3, dans lequel les organosilanes (H) utilisés correspondent à la formule générale (5)
HₛSiR² ₜ (5)
dans laquelle
R² représente un atome d'halogène ou un radical phényle ou alkyle en C₁-C₁₀ éventuellement substitué par des atomes d'halogène,
s a la valeur 1, 2, 3 ou 4 et
t a la valeur 0, 1, 2 ou 3,
la somme de s et t étant au maximum 4.

5. Procédé selon l'une quelconque des revendications 1 à 4, dans lequel on utilise des composés (U) dans lesquels, dans la formule générale (2), Ω a la signification de R³-A⁰, R³ représentant un radical monovalent de formule CH₂=CH-(CH₂)ₙ ou HC≡C-(CH₂)ₙ, dans laquelle n est un nombre entier ayant une valeur de 0 à 8, un ou plusieurs groupes méthylène non adjacents les uns aux autres peuvent être remplacés par des atomes d'oxygène ou des radicaux diméthylsilyle, A⁰ est une liaison chimique ou un radical organique bivalent.

6. Procédé selon la revendication 5, dans lequel A⁰ a la signification de (CRH)ₘ-, m étant un nombre entier ayant une valeur de 0 à 12, R représentant un atome d'hydrogène ou un radical méthyle, et un ou plusieurs groupes méthylène non adjacents les uns aux autres pouvant être remplacés par des atomes d'oxygène, des radicaux diméthylsilyle, des groupes cyclohexylène ou phénylène 1,4-disubstitués.

7. Procédé selon l'une quelconque des revendications 1 à 5, dans lequel, pour la préparation d'organosiloxanes (P) de type cristal liquide, on soumet des composés mésogènes à une hydrosilylation sur les composés organosiliciés (H).

8. Procédé selon la revendication 7, dans lequel les composés mésogènes sont choisis parmi des composés de formule générale (6)
R³-X¹-(A¹-X²)_{d}-R⁵-O-C(O)-CH(R) -CH₂-Z (6)
et des composés de formule générale (7)
R³-X¹-(A¹-X²)_{d}-R⁵-A² (7)
où
R³, R et Z ont les significations précédentes,
R⁵ représente une liaison chimique ou un radical de formule (CH₂)ₘ, dans laquelle m est un nombre entier ayant une valeur de 1 à 12, un ou plusieurs groupes méthylène non adjacents les uns aux autres pouvant être remplacés par des atomes d'oxygène ou des radicaux diméthylsilyle,
X¹ est choisi parmi une liaison chimique et les radicaux bivalents -O-, -C(O)O- et -OC(O)-,
X² représente des chaînons de liaison qui sont choisis parmi une liaison chimique et des radicaux bivalents -C(O)O-, -OC(O)-, -CH₂CH₂-, -CH=N-, -N=CH-, -N=N-, -C(O)NH-, -NHC(O)-, -C≡C-, -CH=CH-, -N=N(O)- et -N (O)=N-,
A¹ représente des radicaux bivalents qui sont choisis parmi des cycles homocycliques ou hétérocycliques à six chaînons, éventuellement substitués par l'atome de fluor ou le groupe cyano ou méthyle, tels que les radicaux 1,4-phénylène, 1,4-cyclohexylène, 2,5-pyridinylène, 2,5-pyrannylène, 2,5-pyrimidinylène, 5,2-pyrimidinylène, 2,5-(1,3-dioxannylène) et 5,2-(1,3-dioxannylène ou parmi des bicycles constitués de cycles à six chaînons, tels que les radicaux 2,6-naphtylidène, 2,7-naphtylidène et 1,4-naphtylidène,
A² représente un groupe terminal qui est choisi parmi un atome d'hydrogène ou d'halogène, des radicaux hydroxy, cyano, méthacryloyloxy, méthacryléthylène-oxy, cholestane, cholestéryle, doristéryle, dianhydrohexitol monofonctionnel, cyclohexane et des radicaux alcényle ayant de 1 à 10 atomes de carbone, dans lesquels un ou plusieurs groupes méthylène non adjacents les uns aux autres peuvent être remplacés par des atomes d'oxygène ou des radicaux diméthylsilyle, et
d peut adopter la valeur 2 ou 3.
